(19) Europäisches Patentamt

European Patent Office

Office européen des brevets

(11) **EP 1 631 090 A1**

(12) **EUROPEAN PATENT APPLICATION**

(43) Date of publication:
01.03.2006 Bulletin 2006/09

(51) Int Cl.:
*H04N 7/26* (2006.01)   *H04N 7/50* (2006.01)

(21) Application number: 04020652.6

(22) Date of filing: 31.08.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **MATSUSHITA ELECTRIC INDUSTRIAL CO., LTD.**
**Kadoma-shi, Osaka 571-8501 (JP)**

(72) Inventors:
• **Sasai, Hisao**
**Osaka-shi**
**Osaka, 533-0013 (JP)**

• **Kondo, Satoshi**
**Yawata-shi**
**Kyoto, 614-8361 (JP)**
• **Wedi, Thomas**
**64823 Gross-Umstadt (DE)**
• **Wittmann, Steffen**
**63263 Neu-Isenburg (DE)**
• **Schlockermann, Martin**
**63322 Roedermark (DE)**

(74) Representative: **Grünecker, Kinkeldey,**
**Stockmair & Schwanhäusser**
**Anwaltssozietät**
**Maximilianstrasse 58**
**80538 München (DE)**

(54) **Moving picture coding apparatus and moving picture decoding apparatus**

(57)    It is an object of the present invention to provide a coding unit and a decoding unit for realizing a coding with high picture quality at a low bit rate. On the coding side, the high frequency band suppression unit (102) controls an amount of generated coding so as to control an amount of generated coding and transmit a degree of suppression. On the decoding side, the high frequency band decoding unit (109) performs high frequency band reconstruction of the image signal according to the degree of suppression so that the high picture quality is realized (FIG. 3).

FIG. 1

**Description**

**BACKGROUND OF THE INVENTION**

**(1) Field of the Invention**

This invention relates to coding and decoding of a moving picture, and in particular to a moving picture coding apparatus and a moving picture decoding apparatus.

**(2) Description of the Related Art**

A technique called predictive coding is known as a technique used for a purpose of a low bit rate coding and transmitting picture signals in a television, a personal computer (PC), a cell phone, or other apparatuses on which picture signals are displayed. The predictive coding is a coding method of predicting an image of an image block forming a picture frame from a region closer in temporal and spatial. For example, MPEG (Moving Picture Expert Group) that is an international standard for a compression of moving picture signals, as for coding, i ) generates a predictive picture, ii ) extracts information used for performing an orthogonal transformation and a quantization on differential information between the predictive picture and the picture to be coded, and information for generating the predictive picture, and iii) compresses and codes the extracted information using an entropy coding.

Also, as a method of coding a bit stream, a predictive picture is generated from picture signals which have been decoded and obtained and differential information obtained by a reverse-transformation is added and a reproduced picture is obtained.

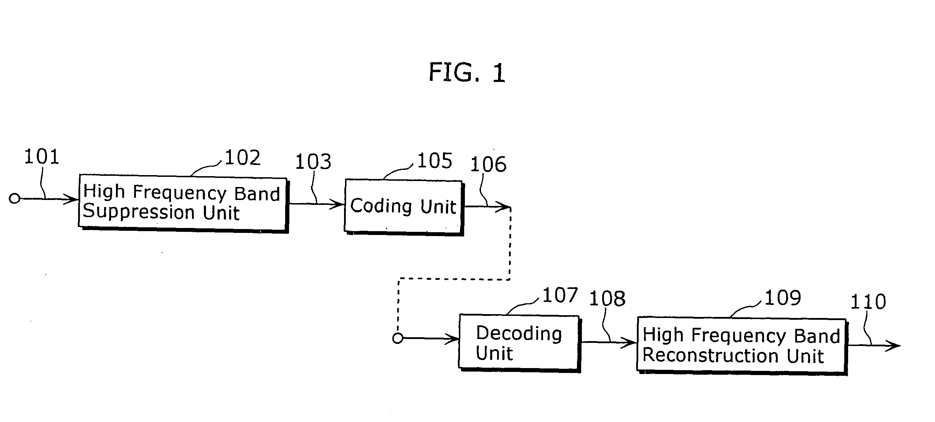

However, it is known that, as higher a compression rate, a deterioration of a picture quality becomes prominent. Following efforts have been made: as disclosed in Japanese Laid-Open Patent Publication application no. H10-234034, an effort of reducing a coding amount to be generated by suppressing in advance specific components of a signal before the coding; and, as disclosed in Japanese Laid-Open Patent Publication application no. 2002-94834, an effort of filtering a reproduced picture to enhance an edge of the reproduced picture whose picture quality is deteriorated (FIG. 1).

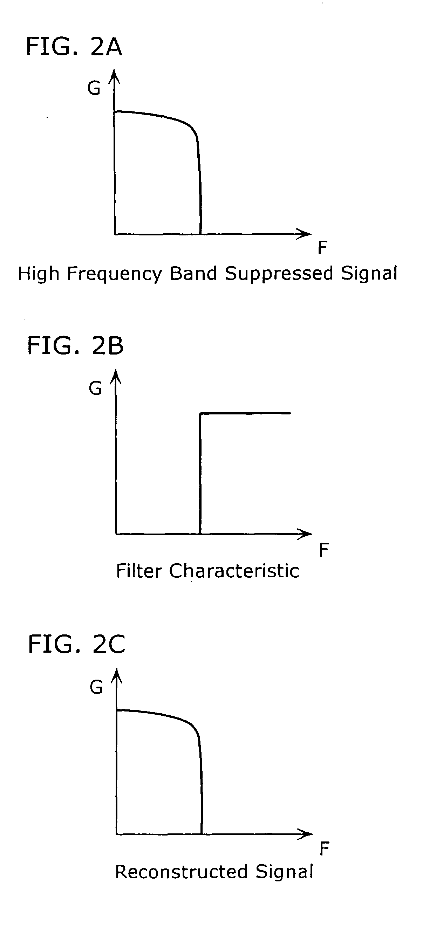

While it is possible to reduce the generated coding amount when specific components such as high frequency information are suppressed, the suppressed information such as the edge of the reproduced picture is lost and cannot be reconstructed. It is explained in detail using FIGS. 2A to 2C. FIG. 2A shows an example of a frequency characteristic of the picture signal when a high frequency component is suppressed. FIG. 2B shows an example of a reconstruction filter using the conventional method. FIG. 2C shows an example of a frequency characteristic of a reconstructed signal by the conventional method. By the conventional method, the signal in the high frequency band is completely lost as shown in FIG. 2A, and the signal cannot be reconstructed even filtering the reproduced picture as shown in FIG. 2C.

**SUMMARY OF THE INVENTION**

Concerning the above mentioned problems, the present invention aims to provide a method of reproducing high frequency information such as an edge and realizing a high compression rate.

In order to solve the problems, the first invention is a moving picture coding apparatus that compresses and codes a moving picture signal, comprising: a high frequency band suppression unit operable to suppress a high frequency component of the moving picture signal included; a coding unit operable to obtain a coded stream by compressing and coding the moving picture signal outputted from the high frequency band suppression unit; and an output unit operable to output, together with the coded stream, additional information showing a degree of suppression by the high frequency band suppression unit.

The second invention is the moving picture coding apparatus further comprising: a decoding unit operable to decode the coded stream so as to obtain a decoded moving picture signal; and a high frequency band reconstruction unit operable to reconstruct the decoded moving picture signal by reconstructing a high frequency component of the decoded moving picture signal in a degree of suppression by the high frequency band suppression unit so as to obtain an output moving picture signal.

The third invention is the moving picture coding apparatus that compresses and codes a moving picture signal, comprising: a high frequency band suppression unit operable to suppress a high frequency component of the moving picture signal; a coding unit operable to output coded streams respectively by compressing and coding the moving picture signal outputted from the high frequency band suppression unit and a degree of suppression by the high frequency suppression unit; and an output unit operable to output a coded stream showing a degree of suppression corresponding to coding mode information in the output moving picture signal.

Accordingly, the present invention allows to generate a coding stream with high picture quality at low bit rate and generate a decoded picture with high picture quality at lower bit rate. Therefore, the practical value is high.

**BRIEF DESCRIPTION OF THE DRAWINGS**

These and other objects, advantages and features of the invention will become apparent from the following description thereof taken in conjunction with the accompanying drawings that illustrate a specific embodiment of the invention. In the Drawings:

FIG. 1 is a block diagram showing a picture coding apparatus that realizes a conventional picture coding method.
FIGS. 2A to 2C are diagrams showing examples of frequency characteristics of an image signal when high frequency components of the image signal is suppressed by the conventional moving picture decoding method.
FIG. 3 is a block diagram explaining a configuration of a moving picture coding apparatus in the first embodiment of the present invention.
FIGS. 4A and 4B are block diagrams explaining a high frequency band suppression unit and a high frequency band reconstruction unit.
FIGS. 5A to 5G are diagrams explaining a method for a motion estimation of the present invention.
FIGS. 6A to 6G are diagrams explaining an effect of a picture deterioration prediction of the present invention.
FIG. 7 is a flowchart explaining a mode selection method of the present invention.
FIG. 8 is a diagram explaining a coefficient modulation of the present invention.
FIG. 9 is a flowchart explaining a mode selection method for the first modified example in the first embodiment of the present invention.
FIG. 10 is a block diagram explaining a configuration of a moving picture coding apparatus in the second embodiment of the present invention.
FIG. 11 is a flowchart explaining an operation of a image deterioration prediction unit of the present invention.
FIG. 12 is a flowchart showing an example of a processing of a temporal high frequency band reconstruction unit and a suppression filter control unit.
FIG. 13 is a flowchart showing an example of a processing of the temporal high frequency band reconstruction unit and the suppression filter control unit.
FIGS. 14A to 14C are diagrams for explaining a transmission method.
FIG. 15 is a block diagram explaining about configurations of a moving picture coding apparatus and a moving picture decoding apparatus in the third embodiment of the present invention.
FIG. 16 is a flowchart explaining a processing of an image characteristic obtainment unit and a signal suppression unit.
FIG. 17 is a block diagram explaining about configurations of the moving picture coding apparatus and the moving picture decoding apparatus in the first modified example of the third embodiment.
FIG. 18 is a flowchart showing an example of a processing of a decoded image characteristic obtainment unit and the high frequency band reconstruction unit.
FIG. 19A is a block diagram explaining about a configuration of a high frequency band suppression unit included in a moving picture coding apparatus in the forth embodiment of the present invention.
FIG. 19B is a block diagram explaining about a configuration of a high frequency band reconstruction unit included in a moving picture decoding apparatus in the first modified example.
FIG. 19C is a block diagram explaining about a configuration of a high frequency band reconstruction unit included in the moving picture decoding apparatus in the second modified example.
FIGS. 20A to 20D are diagrams explaining an operation of a high frequency band smoothing filter.
FIGS. 21A to 21F are diagrams explaining an operation of a signal suppression unit and a signal reconstruction unit in the fifth embodiment of the present invention.
FIGS. 22A to 22C are diagrams showing a recording medium for storing a program for realizing the moving picture coding apparatus and the moving picture decoding apparatus described in each of the above mentioned embodiments in a computer system in the sixth embodiment.
FIG. 23 is a block diagram explaining a configuration of a content supply system as a whole in the seventh embodiment
FIG. 24 shows an example of a cell phone using the moving picture coding apparatus and the moving picture decoding apparatus in the seventh embodiment.
FIG. 25 is a block diagram of the cell phone in the seventh embodiment.
FIG. 26 is an example of a digital broadcasting system in the seventh embodiment.

**DESCRIPTION OF THE PREFERRED EMBODIMENT(S)**

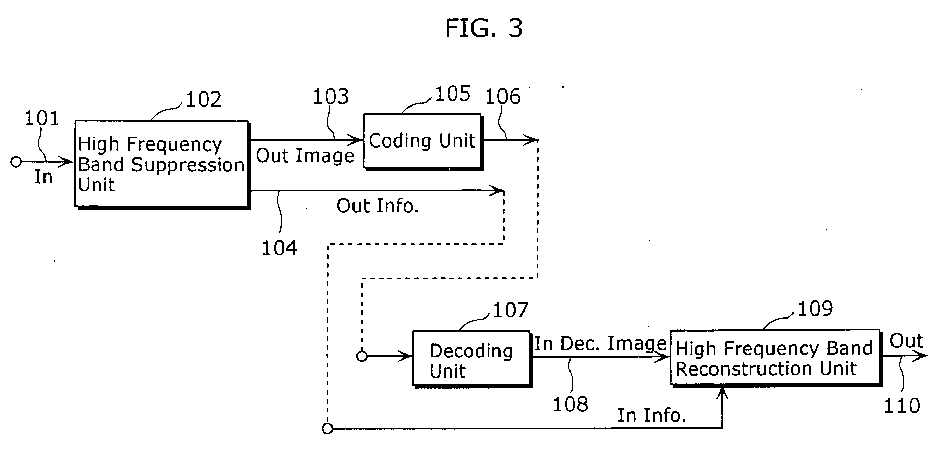

Hereafter, embodiments of the present invention are explained using FIG. 3 to FIG. 26.

(First Embodiment)

A moving picture coding apparatus and a moving picture decoding apparatus in the first embodiment of the present invention are explained with references to FIG. 3 to FIGS. 6G. In addition, for a concise explanation, a signal suppression processing and a signal decoding processing are explained as a process of a two-dimensional image signal in a horizontal direction on a screen. Here, a moving picture signal is made of image signals.

FIG. 3 is a block diagram explaining about a configuration of the moving picture coding apparatus and the moving picture decoding apparatus. The moving picture coding apparatus includes a high frequency band suppression unit 102 and a coding unit 105. The moving picture decoding apparatus includes a decoding unit 107 and a high frequency band reconstruction unit 109. The high frequency band suppression unit 102 suppresses a high frequency component of an inputted image signal 101 and outputs a high frequency band suppressed image signal 103 and a high frequency band suppression degree 104. The coding unit 105 compresses and codes the high frequency band suppressed picture signal 103 and outputs an image bit stream 106. The decoding unit 107 decodes the image bit stream 106 and outputs a decoded image signal 108. The high frequency band reconstruction unit 109, based on the high frequency band suppression degree 104, decodes high frequency of the decoded image signal 108 and outputs a reproduced image signal 110.

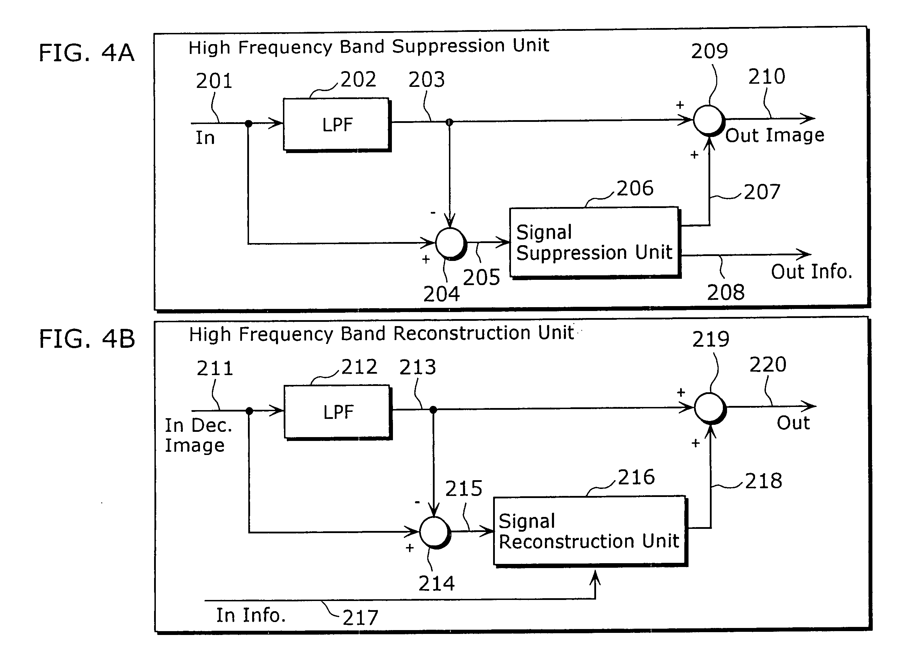

Further, the high frequency band suppression unit 102 which is a constituent of the moving picture coding apparatus of the present invention and the high frequency band reconstruction unit 109 which is a constituent of the moving picture decoding apparatus of the present invention are explained using FIGS. 4A and 4B (same signal lines shown in FIG. 3 and FIGS. 4A and 4B are indicated with same numbers or marks).

FIG. 4A shows the high frequency band suppression unit 102 that constitutes the moving picture coding apparatus of the present invention. The high frequency band suppression unit 102 has a low-pass filter 202, a signal suppression unit 206, a calculation unit 204 and a calculation unit 209. The low-pass filter 202 passes relatively low frequency components in an input image signal 201 and outputs a low frequency image signal 203. The calculation unit 204 calculates a difference between the input image signal 201 and the low frequency image signal 203 and outputs a high frequency image signal 205. The signal suppression unit 206 suppresses the high frequency image signal 205 and outputs a high frequency band suppressed high frequency image signal 207 and a degree of the high frequency band suppression 208. The calculation unit 209 adds the low frequency image signal 203 to the high frequency band suppression high frequency image signal 207 and outputs a high frequency band suppressed image signal 210.

FIG. 4B shows the high frequency band reconstruction unit 109 that constitutes the moving picture decoding apparatus of the present invention. The high frequency band reconstruction unit 109 has a low-pass filter 212, a signal reconstruction unit 216, a calculation unit 214 and a calculation unit 219. The low-pass filter 212 passes relatively low frequency components in the decoded image signal 211 and outputs the low frequency image signal 213. The calculation unit 214 calculates a difference between the decoded image signal 211 and the low frequency image signal 213 and outputs a high frequency image signal 215. The signal reconstruction unit 216, based on the high frequency band suppression degree 104, decodes a high frequency band of the high frequency image signal 215 and outputs a high frequency band decoded high frequency image signal 218. The calculation unit 219 adds the low frequency image signal 213 to the high frequency band decoded high frequency image signal 218 and outputs a reproduced image signal 220.

An operation of the moving picture decoding apparatus is explained with references to FIG. 3, FIGS. 4A and 4B.

The input image signal 101 is inputted into the high frequency band suppression unit 102. Firstly, the high frequency band suppression unit suppresses data in a high frequency band of the image signal by performing low frequency band passed filtering on the input image signal 201 with the low-pass filter 202 and outputs the low frequency image signal 203. Next, the calculation unit 204 calculates a difference between the input image signal 201 and the low frequency image signal 203 so as to output the high frequency image signal 205 that is a signal in a high frequency band of the image signal. The high frequency image signal 205 is a signal in the high frequency band of the input image signal 201. Following that, the signal suppression unit 206 suppresses a signal intensity of the high frequency image signal 205 and outputs the high frequency band suppressed high frequency image signal 207. The calculation unit 209 adds the high frequency band suppressed high frequency image signal 207 to the low frequency image signal 203 that is a signal in a low frequency band of the input image signal. Consequently, the high frequency band suppressed image signal 210 whose high frequency band is reduced by the signal suppression unit 206 is outputted. The coding unit 105 performs moving picture coding processing on the high frequency band suppressed image signal 210 (103) and transmits the coded signal as the image bit stream 106. Moreover, the signal suppression unit 206 outputs the high frequency band suppression degree 208 (104) which is a degree of the high frequency band suppression and also transmits the information.

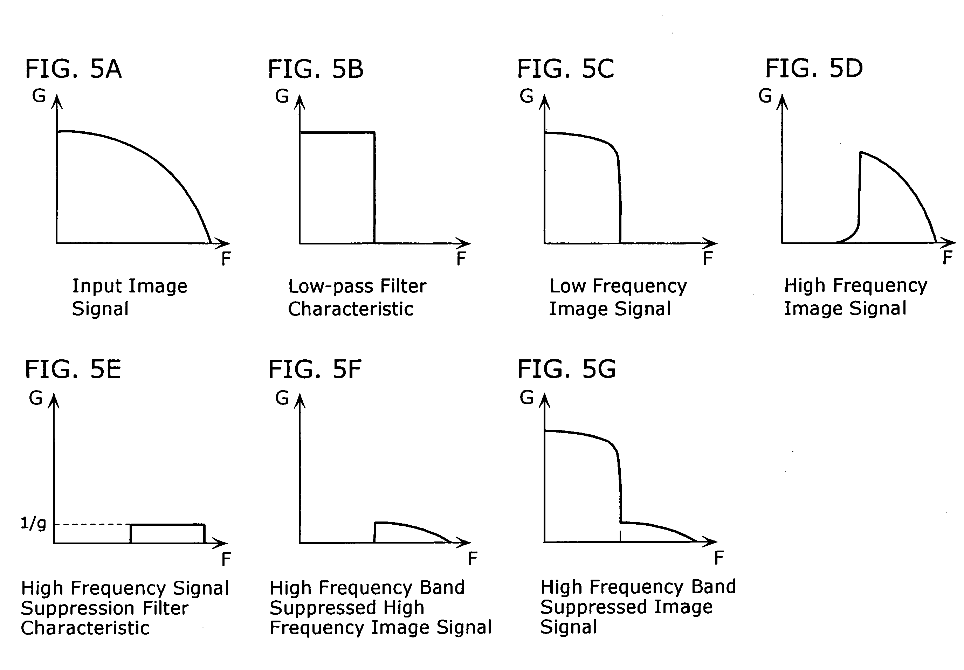

An operation of the high frequency band suppression unit is explained in detail with references to FIGS. 5A to 5G.

FIG. 5A shows a frequency characteristic of the input image signal 201. FIG. 5B shows a filter characteristic of the low-pass filter 202. FIG. 5C shows a frequency characteristic of the low frequency image signal 203. FIG. 5D shows a frequency characteristic of the high frequency image signal 205 that is a difference between signals shown in FIG. 5A and FIG. 5C. The signal suppression unit 206, as shown in FIG. 5E, suppresses the signal intensity of the high frequency image signal by filtering and the like with a filter which has a characteristic of attenuating signals. FIG. 5F shows the high frequency band suppressed high frequency image signal 207. As described above, the signal suppression unit performs processing of having an effect of attenuating the signal intensity in the high frequency band of the image signal. An amount to be attenuated at this time is outputted as the high frequency band suppression degree 208. Lastly, the high frequency band suppressed image signal shown in FIG. 5G is obtained by adding the high frequency band suppressed high frequency image signal (FIG. 5F) whose high frequency band is suppressed to the low frequency image signal (FIG. 5C) that is a low frequency band of the input image signal. The generated coding amount at the time of moving picture coding is reduced by generating the high frequency band suppressed image signals. Also, the suppressed high frequency band can be reconstructed by reconstructing it with the suppression degree.

An operation of the moving picture decoding apparatus is explained with references to FIG. 3, FIGS. 4A and 4B.

The image bit stream 106 is inputted into the decoding unit 107. The decoding unit 107 performs the moving picture decoding processing correspond to the method by which the moving picture is coded and outputs the decoded image signal 108. The high frequency band reconstruction unit 109 suppresses data in the high frequency band of the image signal and outputs the low frequency image signal 213 by performing low-pass filtering processing with the low-pass filter 212 on the decoded image signal 211 (108). Next, the calculation unit 214 calculates a difference between the decoded image signal 211 and the low frequency image signal 213. Consequently, the high frequency image signal 215 that is a signal having only the high frequency band of the image signal is outputted as similar to the high frequency band suppression unit 102. The high frequency image signal 215 is a signal in the high frequency band of the decoded image signal 211. Then, the signal reconstruction unit 216 reconstructs the signal intensity according to the high frequency suppression degree 217 and the high frequency reconstructed high frequency image signal 218 is outputted. The calculation unit 219 adds the high frequency band decoded high frequency image signal 218 to the low frequency image signal 213 and the reproduced image signal 220 (110) is outputted as the consequence.

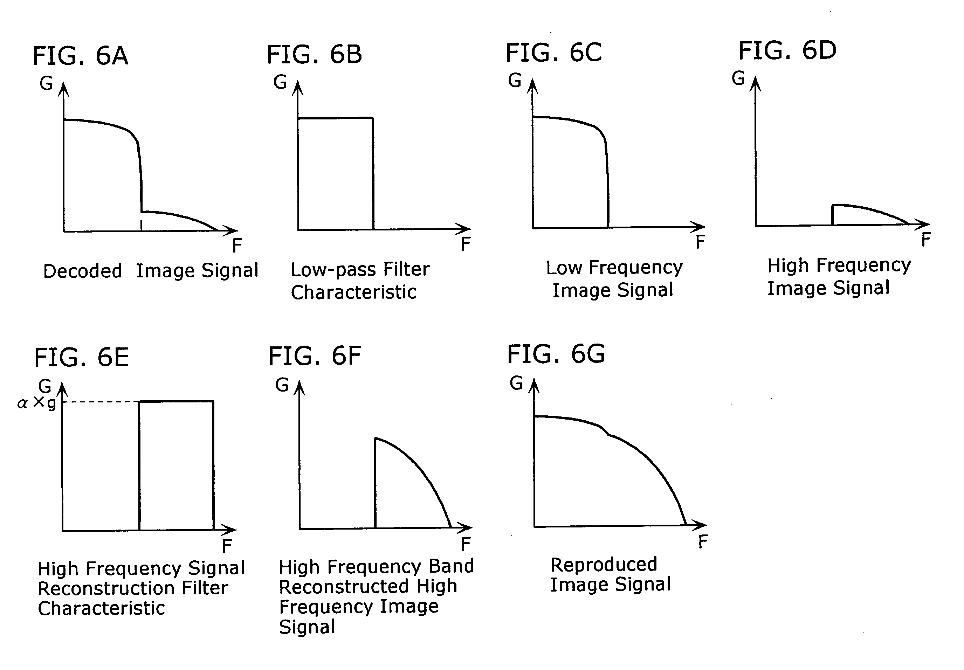

An operation of the high frequency band reconstruction unit 109 is explained in detail with references to FIGS. 6A to 6G.

FIG. 6A shows a frequency characteristic of the decoded image signal 211. FIG. 6B shows a filter characteristic of the low-pass filter 212. FIG. 6C shows a frequency characteristic of the low frequency image signal 213. FIG. 6D shows a frequency characteristic of the high frequency image signal 215 which is a difference between the signal shown in FIG. 6A and the signal shown in FIG. 6C. The signal reconstruction unit 216, as shown in FIG. 6E, reconstructs the signal intensity of the high frequency image signal by processing such as filtering and the like having a characteristic of amplifying the signal intensity. The signal reconstruction unit 216, as described above, performs processing having an effect of amplifying signal intensity in the high frequency band of the image signal. The amount of the amplification therein is determined by judging it from the high frequency band suppression degree 217. As the suppression unit and the reconstruction unit to have a complementary relationship, for example as shown in FIG. 5E, the amount of amplification, in the case where the signal is suppressed to a signal intensity of $1/g$, may be determined to reconstruct the signal to the inverse intensity of g-times. Accordingly, the signal can be reconstructed having fewer differences with the signal before the suppression.

Further, considering the amount of attenuation of the high frequency components by coding, the amount of amplification may be determined as $\alpha \times g$ times ($\alpha$ is a real number that is 1 or more). Accordingly, the amount of attenuation of the high frequency components by coding can also be reconstructed. FIG. 6F shows the high frequency band reconstructed high frequency image signal 218. Lastly, the reproduced image signal shown in FIG. 6G is obtained by adding the high frequency band reconstructed high frequency image signal (FIG. 6F) whose high-frequency band is reconstructed to the low frequency image signal (FIG. 6C) which is the low frequency band part of the decoded image signal. Accordingly to the processing, the lost information in the high frequency component can be reconstructed according to the degree of suppression of the high frequency band and obtain the reconstructed image signal having information up to the high frequency band.

Here, in the high frequency band suppression unit 102 shown in FIG. 4A and the high frequency band reconstruction unit 109 shown in FIG. 4B, a method of outputting the low frequency image signal and the high frequency image signal using the low-pass filter and the calculation unit is used. However, not limiting to the method, it is allowed unless it is a method having a characteristic of separating the high frequency component region from the low frequency component region of the signal. Furthermore, in all embodiments of the present invention, the separation of the high frequency component region and the low frequency component region is explained by the above mentioned method. However, it does not limit to the method.

Accordingly to the present embodiment, the amount of generated coding can be reduced by suppressing the input image signal. Further, the suppressed signal can be reconstructed by transmitting information about the signal suppression.

(Second Embodiment)

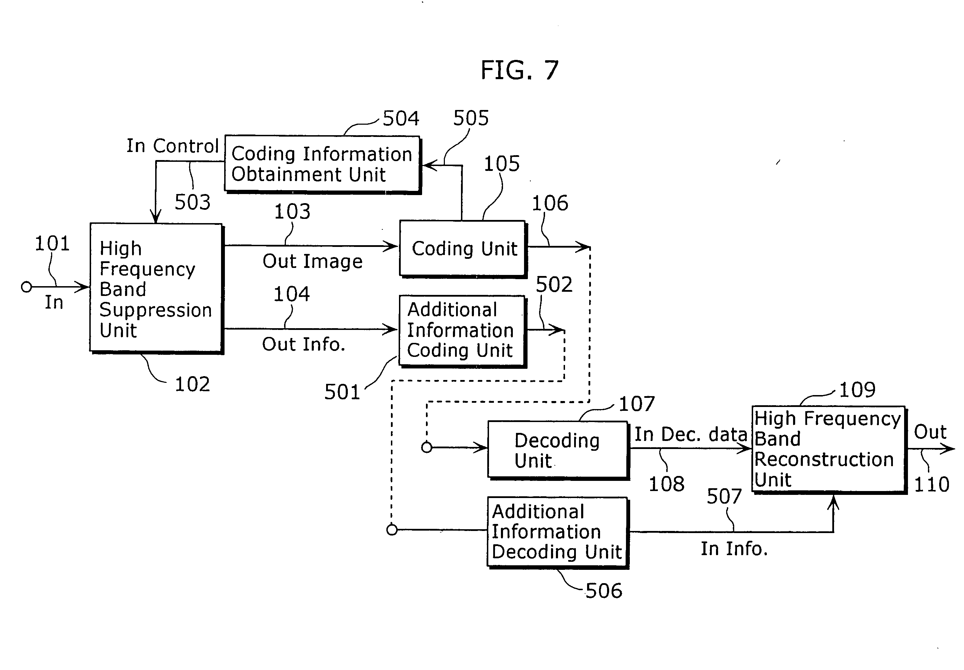

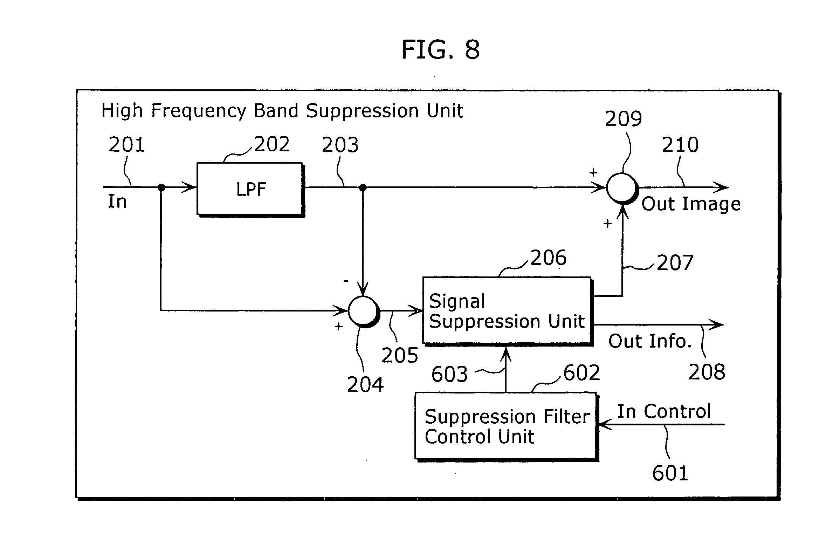

Referring to FIG. 7 and FIG. 8, a moving picture coding apparatus and a moving picture decoding apparatus in the second embodiment of the present invention are explained. Similar to the first embodiment, for a concise explanation, a signal suppression processing and a signal reconstruction processing are explained as a process of a two-dimensional image signal in a horizontal direction on a screen.

FIG. 7 is a block diagram explaining about a configuration of the moving picture coding apparatus and the moving picture decoding apparatus. In addition to the configuration shown in FIG. 3, FIG. 7 shows the moving picture coding apparatus and the moving picture decoding apparatus having an additional information coding unit 501, a coding information obtainment unit 504, and an additional information decoding unit 506.

The additional information coding unit 501 codes the inputted high frequency band suppression degree 104 and outputs coding additional information 502. The coding information obtainment unit 504 obtains image coding information 505 and outputs a mode control signal 503 based on the image coding information 503. The additional information decoding unit 506 decodes the inputted coding additional information 502 and outputs a high frequency band suppression degree 507.

Here, the high frequency band suppression unit 102 which is a constituent of the moving picture coding apparatus of the present embodiment is further explained with reference to FIG. 8.

FIG. 8 shows the high frequency band suppression unit 102 included in the moving picture coding apparatus in the second embodiment of the present invention. The high frequency band suppression unit shown in FIG. 7 is a high frequency band suppression unit having a suppression filter control unit 602 in addition to the configuration shown in FIG. 4A. The suppression filter control unit 602 outputs mode information 603 based on the inputted mode control signal 601.

An operation of the moving picture coding apparatus in the present embodiment is explained with references to FIG. 7 and FIG. 8.

Similar to the first embodiment, the input image signal 101 is divided into the low frequency image signal 203 and the high frequency image signal 205; the signal intensity of the high frequency image signal 205 is suppressed by the signal suppression unit 206 and the high frequency band suppressed high frequency image signal 207 is outputted; the outputted high frequency image signal 207 is added to the low frequency image signal 203 by the calculation unit 209; and the high frequency band suppressed image signal 210 whose high frequency component is reduced is outputted. In the present embodiment, the mode information 603 controls a method of the signal suppression unit 206 to suppress signal intensity of the high frequency image signal 205. The mode information 603 is information indicating a type of a suppression filter and provided by the suppression filter control unit 602. The suppression filter control unit 602 controls the type of the filter by the code control signal 503 (601) generated based on the image coding information 505 obtained from the coding unit 105 by the coding information obtainment unit 504. The coding unit 105 performs moving picture coding processing on the obtained high frequency band suppressed image signal 210 (103) and transmits it as the image bit stream 106. Further, the signal suppression unit 206 outputs the high frequency band suppression degree 208 (104) which is a degree of the high frequency band suppression. The additional information coding unit 501 entropy-codes the outputted high frequency band suppression degree 208 and transmits it as the coding additional information 502. The transmitted coding additional information 502 is decoded by the additional information decoding unit 506 and inputted into the high frequency band reconstruction unit 109 as a degree of the decoded high frequency band suppression. The decoded high frequency band suppression degree 507 has same information as that of the high frequency band suppression degree 104 so that the high frequency band reconstruction unit 109 performs the operation explained in the first embodiment. Thus, the reconstructed image signal 110 can be obtained.

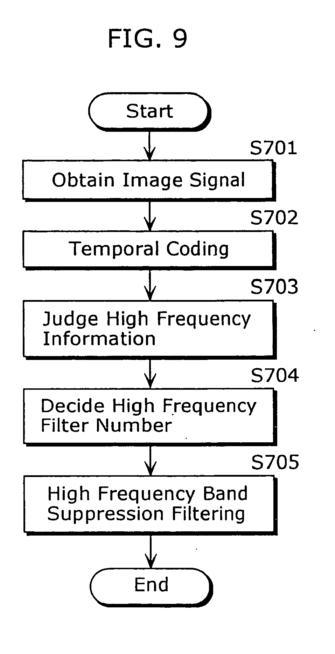

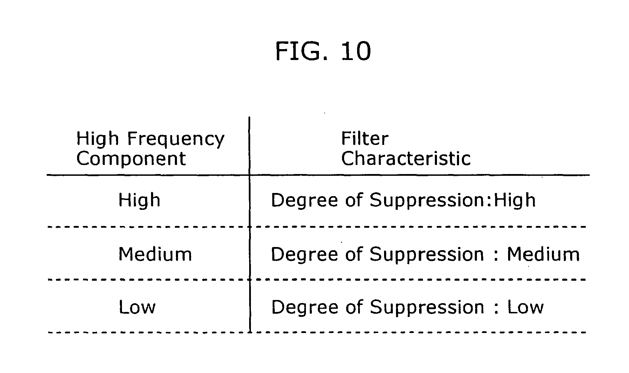

An operation of the coding information obtainment unit 504 and the suppression filter control unit 602 is explained in detail with references to FIG. 9 and FIG. 10 that are diagrams for explaining an example of the suppression filter control unit 602.

FIG. 9 is a flowchart showing an example of processing by the suppression filter control unit 602. When receiving the input image signal (S701), the suppression filter control unit 602 outputs an intensity of the high frequency image signal without changing and codes an image signal whose high frequency band is not suppressed (S702). The suppression filter control unit 602 i ) obtains the image coding information therein, ii ) examines a high frequency image signal included in the image coding information and about how much high frequency information is included (S703), and iii) determines a high frequency band suppression filter number (S704). Determining the filter number as the mode information, the signal suppression unit 206 suppresses the high frequency band (S705). Here, the coding information indicates, for example, an orthogonal transformation coefficient and information quantized the value of the coefficient. The signal in the high frequency can be examined by examining an amount of information, in the information, about components in the high frequency band in the frequency band.

Here, the filter number of the high frequency band suppression does not limit to the number in particular. It is allowed unless the filter intensity differs.

FIG. 10 shows an example of a basis of judgement for determining the high frequency band suppression filter number (S704) therein. When the high frequency components of the coding information are high, the generated coding amount can be reduced by suppressing the high frequency components and reconstructed the high frequency information at the decoding side. Therefore, a filter having a characteristic of high suppression degree of the signal intensity is selected. When the high frequency components of the coding information are low, the high frequency information is lost by the coding when the suppression degree of the signal intensity is increased and the high frequency information cannot be reconstructed at the decoding side. Therefore, a filter having a characteristic of low suppression degree of the signal intensity is selected.

Here, FIG. 10 is an example and the basis of judgement does not limit to this unless having a relationship of a high frequency component and a filter characteristic shown in FIG. 10.

Accordingly to the present embodiment, similar to the first embodiment, the generated coding amount can be reduced by suppressing the input image signal. Additionally, the degree of suppressing the high frequency signal can be controlled considering a degree of deterioration of the high frequency image signal by the coding so that the generated coding amount can be further reduced. As a consequence, the moving picture coding apparatus and the moving picture decoding apparatus that can decode the suppressed signal can be provided according to the information about the signal suppression.

Here, a unit of the high frequency band suppression processing is not limited to only one in a picture, but may be determined for each specific region. The specific region is, for example, may be a unit for the processing in the coding unit or a unit for the processing of performing the orthogonal transformation processing.

In the case where the unit for the processing is small, the picture quality can be improved by minutely controlling the high frequency band suppression processing. Further, in the case where the unit of the processing is big, the amount of calculation is reduced and the coding amount of additional information can be reduced. Note that, a unit of the high frequency band suppression processing has an effect common to all embodiments of the present invention.

(First Modified Example of Second Embodiment)

In a range of practice, the second embodiment may perform the following modification.

The present modification is, as an operation of the coding information obtainment unit 504 shown in FIG. 7 explaining a configuration of the second embodiment, to code and decode the image signal whose high frequency band is suppressed, and control a degree of suppression of the high frequency band of the image signal by obtaining a result in the case for its reconstruction.

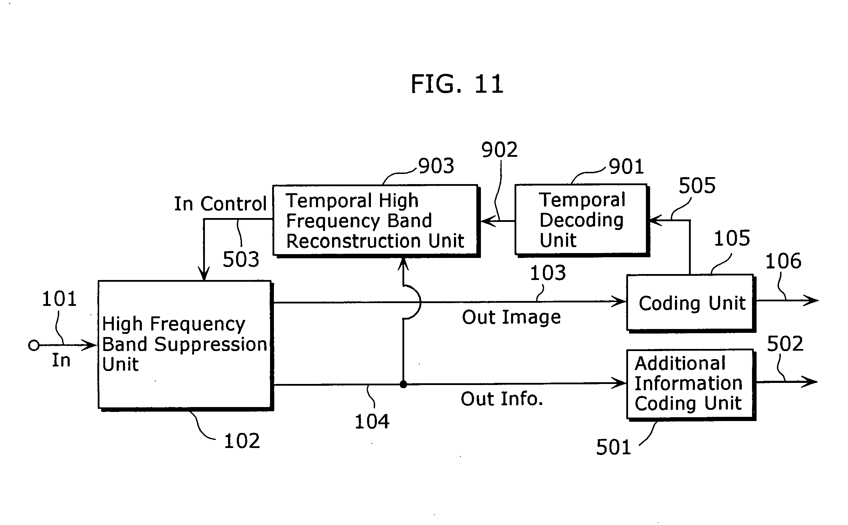

It is explained in detail with reference to a block diagram FIG. 11 explaining a configuration of the modified example.

FIG. 11 is the block diagram explaining about the configuration of the moving picture coding apparatus. FIG. 11 shows the moving picture coding apparatus configured by removing the coding information obtainment unit 504 shown in FIG. 7 and adding a temporal decoding unit 901 and a temporal high frequency band reconstruction unit 903.

The temporal decoding unit 901 temporally codes the inputted image coding information 505 and outputs a temporal decoded image signal 902. The temporal high frequency band reconstruction unit 903 inputs outputs the mode control signal 503 based on the inputted temporal decoded image signal 902 and the high frequency band suppression degree 104.

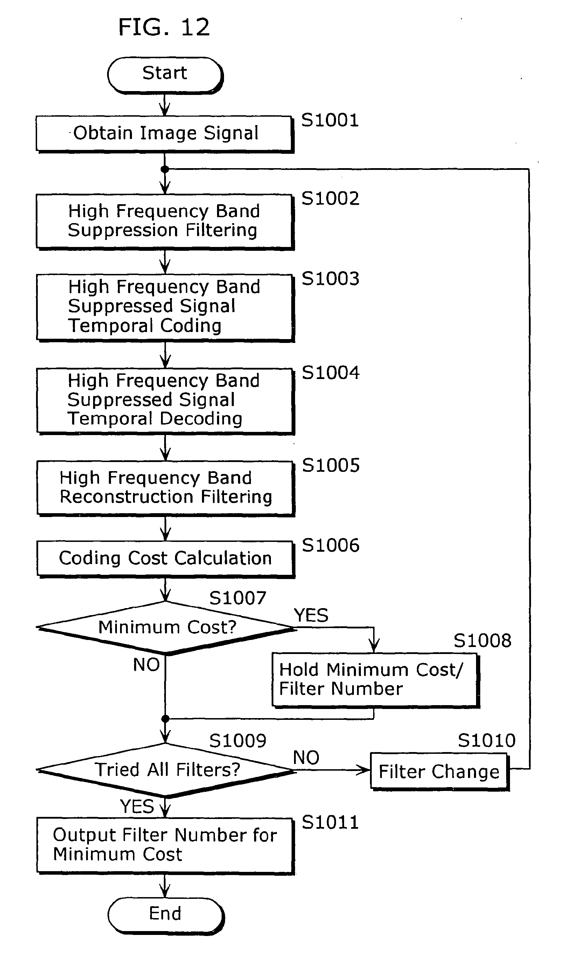

An example of an actual operation of the modified example is explained in detail with references to FIG. 11 and FIG. 12.

FIG. 12 is a flowchart showing an example of a processing of the temporal high frequency band reconstruction unit 903 and the suppression filter control unit 602. When the input image signal is obtained (S1001), the suppression filter control unit 602 performs high frequency band suppression filtering processing using a predetermined filter (S1002). Next, it codes the high frequency band suppressed image signal to be outputted (S1003). It obtains the image coding information therein; the temporal decoding unit 901 performs a temporal decoding process on the obtained image coding information; and the temporal decoded image signal is outputted (S1004). A high frequency band reconstruction processing is performed using the temporal decoded image signal and the high frequency band reconstruction filter which corresponds to the high frequency band suppression filter used for the high frequency band suppression (S1005). A coding cost C is calculated from a differential signal amount D which is a difference between the reconstructed image signal and the input image signal, a coding amount A required for a transmission of the high frequency band suppression, with a generated coding amount B which is an amount generated when the image signal is coded (S1006). For example, the cost C is indicated by a size of an equation (1). If the cost C is small, it shows that an efficient coding can be performed.

$$C = D + \lambda (A + B) \qquad (1)$$

Here, λ is a weighting factor. Note that, A, B and D shown in the equation (1) are not limited to the values shown above. A is a value which has a same relationship as the coding amount necessary for the transmission of the high frequency band suppression degree: that is, it may be the values such as 2 when the coding amount is high, 1 when it is low, 0 when the amount is zero. B may be a value having the same relationship with that of the generated coding amount of the image signal. For example, it may be an estimated value calculated from an orthogonal transformation coefficient. D may be a value having the same relationship with that of the differential signal amount which is a difference between the reconstructed image signal and the input image signal. For example, a differential value from only specific signals can be used. By using these substitution values, it is expected to reduce the amount of calculation.

In addition, A, B, and D may be omitted for the simplicity. Even if they are omitted, it can be controlled based on at least single information. Therefore, the effect of the present invention is valid.

Next, the calculated cost is judged. Within ever calculated costs, it is judged whether or not the calculated cost is the minimum (S1007). However, it is determined that the first cost is always the minimum. When the cost is minimum, a value of the minimum cost and a number of the suppression filter are stored (S1008). Next, it is judged whether or not all of the suppression filters are tried (S1009). When there are untried suppression filters, the suppression filter is substituted (S1010) and the processes from S1002 to S1009 are performed and the suppression number is calculated (S1011). Through these steps, the high frequency band suppression filter that can reduce the deterioration of the picture quality and the generated coding amount can be selected.

Here, the processes may be terminated when the cost is under the predetermined threshold and there is no need of trying all the filters. With the termination processing, an appropriate high frequency band suppression filter causing less processing amount can be selected.

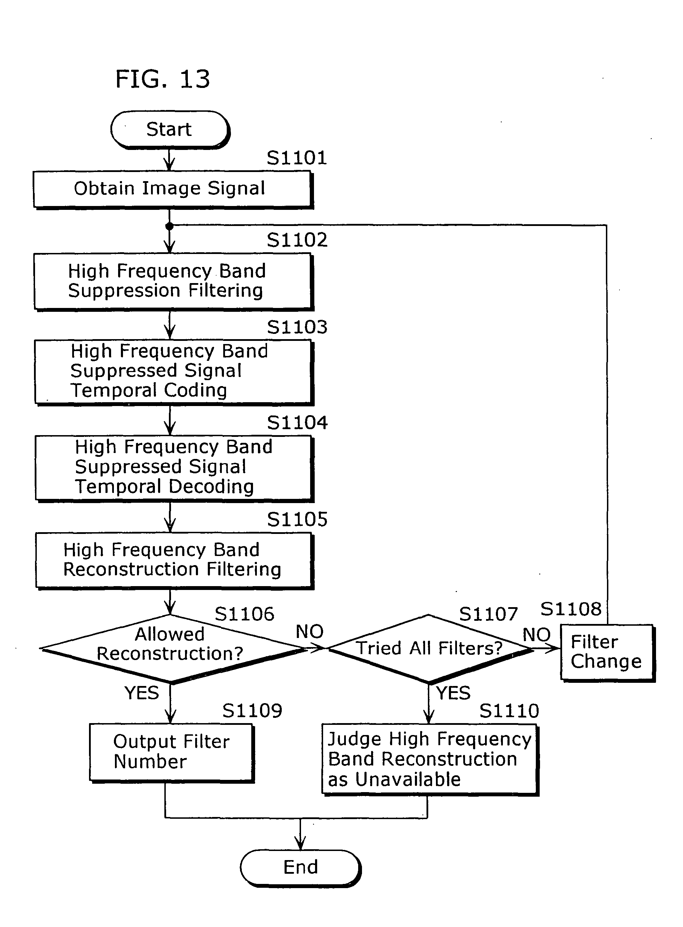

The other example of the actual operation of the modification example is explained in detail with references to FIG. 11 and FIG. 13.

FIG. 13 is a flowchart showing an example of processing of the temporal high frequency band reconstruction unit 903 and the suppression filter control unit 602. When the input image signal is obtained (S1101), the suppression filter control unit 602 performs the high frequency band suppression filtering processing with a predetermined filter (S1102). Next, it codes the high frequency band suppressed image signal as an output (S1103). Then, it obtains the image coding information therein and the temporal decoding unit 901 performs a temporal decoding processing and outputs a temporal decoded image signal (S1104). The high frequency band reconstruction processing is performed with the temporal decoded image signal and the high frequency band reconstruction filter corresponding to the high frequency band suppression filter used for the high frequency band suppression (S1105). Comparing the reconstructed image signal with the input image signal, it is judged whether the high frequency information can be reconstructed (S1106). As a basis of the judgement, a difference between the high frequency component of the input image signal and the high frequency component of the reconstructed image signal is calculated. If the difference is over the predetermined threshold, it is judged that the reconstruction cannot be made. Note that, it is not particularly limited in the case where, as the basis of the judgement, examining a similarity between the high frequency component of the input image signal and the high frequency component of the reconstructed image signal and judging that the reconstruction can be made if the similarity is higher and that it cannot be made if the similarity is fewer. When the reconstruction is not allowed, it judges whether or not all of the predetermined suppression filters are used (S1107). If all of the predetermined suppression filters are not used, the filter is changed to a new predetermined suppression filter (S1108) and the processes from S1102 to S1106 are performed again. In the step S1106, when it is judged that the reconstruction is allowed, the number of the suppression filter is outputted (S1109), and the processing is terminated. Also, in the step S1107, when all filters are used, it is judged that no filter can reconstruct the high frequency band (S1110) and the filter number is outputted, the filter number indicating that the filter does not suppress.

When the processing is performed following these steps, the high frequency band can be reconstructed by changing the predetermined filter from a filter with high degree of suppression in the high frequency band to a filter with low degree of suppression. Additionally, a filter with high degree of high frequency band suppression can be selected and an amount of processing can be reduced.

In FIG. 12 and FIG. 13, the filter number is used to explain the high frequency band suppression. However, it is not particularly limited to the number unless the strength of filters differs.

As described above, using the modified example of the present example, in addition to an effect of the second embodiment, the high frequency signal suppression degree can be controlled in consideration of a degree of deterioration of the image signal and the generated coding amount by coding. Accordingly, the generated coding amount can be further reduced. Therefore, based on the information of the signal suppression, the present invention can provide a moving picture coding apparatus and a moving picture decoding apparatus capable of reconstructing the suppressed signal.

(Second Modified Example of Second Embodiment)

The second embodiment allows the following modification in a range of the practice.

It is explained that the additional information coding unit 501 entropy-codes and transmits the high frequency band suppression degree as the coding additional information 502. However, it may also be transmitted paired with the image bit stream 106.

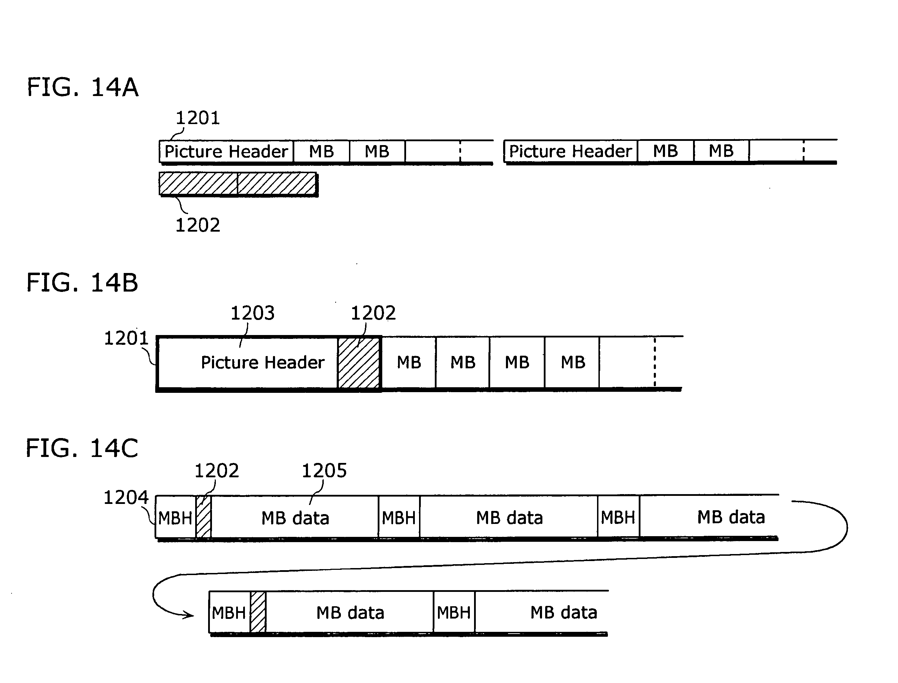

The transmission method is explained in detail with references to FIGS. 14A to 14C.

FIGS. 14A to 14C are diagrams for explaining the transmission method. FIG. 14A shows an example of transmitting an image bit stream 1201 and coding additional information 1202 as a separate bit stream.

In this case, the image bit stream 1201 is transmitted completely separately from the coding additional information 1202. Therefore, even in the case where it does not correspond to the coding additional information 1202, the decoding side can obtain a decoded image without problems. In a moving picture decoding apparatus corresponding to the coding additional information 1202, the high frequency information is coded so that the decoded picture quality can be improved. Also, the coding additional information 1202 is transmitted as separate information from the image bit stream 1201 so that the transmission apparatus can stop the transmission itself. Therefore, in a communication with narrow bandwidth, the transmission can be stopped when it is not necessary.

FIG. 14B shows an example of adding the coding additional information 1202 to an area of a picture header 1203 in the image bit stream 1201, the area being into which data can be freely stored. The area indicates an area where it is determined that a specific process is performed on information stored in the area in a standard, or that the processing is not performed. For example, it is called user data of the MPEG standard.

The picture header is an area into which information common to images of one picture is stored, the information being added one to one picture.

In this case, the decoding side can obtain a decoded image without problems even when not corresponding to the coding additional information 1202. Also, the moving picture decoding apparatus corresponding to the coding additional information 1202 can reconstruct the high frequency information. Therefore the decoded picture quality is improved.

Note that in FIG. 14B, the area is explained as the picture header. Here, not limiting to the picture header, but the area may be a sequence header that is an information region in a head of a moving picture, a GOP header that is an information region in a specific section of the moving picture, and the like unless data is allowed to be stored freely into the area.

FIG. 14C shows an example of adding the coding additional information 1202 to a macro block header 1204 in the image bit stream 1201. The macro block header is information added one by one to a specific region into which images composed of one picture are divided. For example, the specific region is a block with a size of 16 x 16 pixels. The data for each region is stored into the macro block data 1205. The coding additional information 1202 is not necessarily existed in all regions. Therefore, it is added only to where it is needed.

In this case, the coding additional information can be added to only where it is needed so that an amount of information to be transmitted can be reduced.

Moreover, it may also be transmitted paired with the image data, for example, by using a digital water marking technique.

As described above, in addition to the effect in the second embodiment, the modified example of the present embodiment can further reduce the amount of information to be transmitted. Or, it allows, for example, a transmission useful for the practice in a case where the decoding side does not correspond.

Furthermore, the modified example of the present embodiment does not limit to the second embodiment. It is applicable to all transmissions of bit streams dealt in the present invention.

(Third Embodiment)

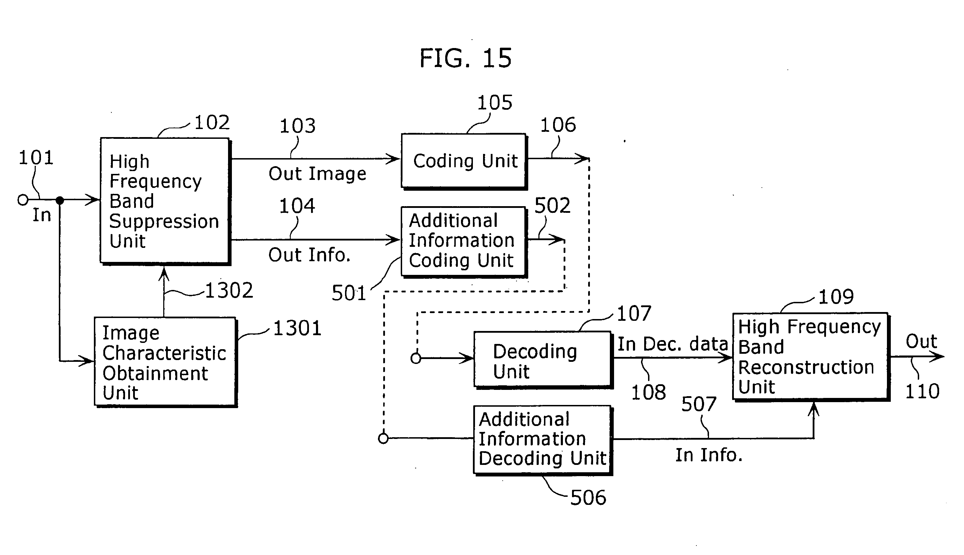

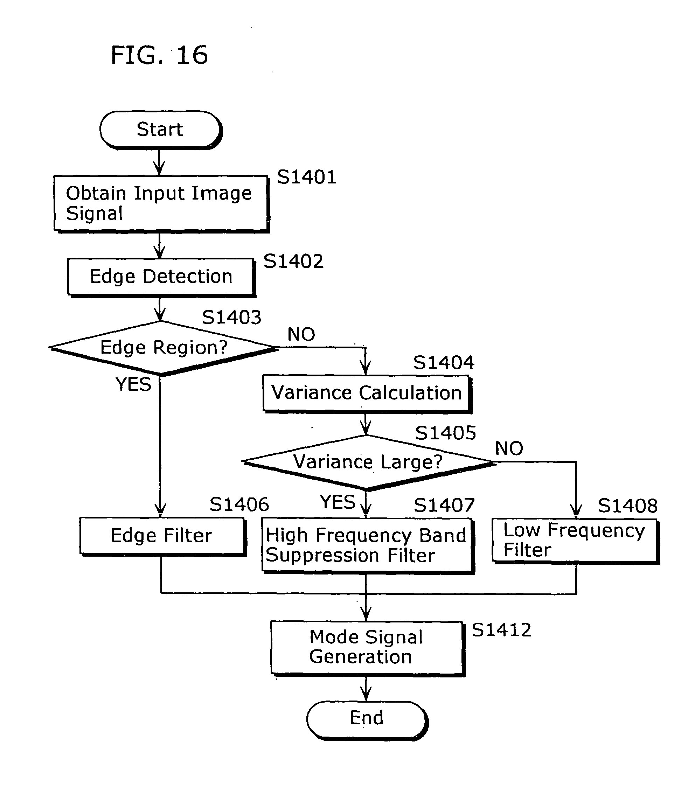

With references to FIG. 15 and FIG. 16, a moving picture coding apparatus and a moving picture decoding apparatus as in the third embodiment of the present invention are explained. For the concise explanation, similar to the first and second embodiments, a signal suppression processing and a signal decoding processing are explained as a processing of a two-dimensional image signal in a horizontal direction on a screen.

FIG. 15 is a block diagram explaining about a configuration of the moving picture coding apparatus and the moving picture decoding apparatus. FIG. 15 shows the moving picture coding apparatus and the moving picture decoding apparatus configured removing the coding information obtainment unit 504 and adding an image characteristic obtainment unit 1301 from the configuration shown in FIG. 7.

The image characteristic obtainment unit 1301 outputs a mode control signal 1302 based on the image characteristic of the inputted input image signal 101.

It is explained about an operation of the image characteristic obtainment unit and the signal control unit with references to FIG. 15 and FIG. 16.

FIG. 16 is a flowchart explaining about a processing of the image characteristic obtainment unit 1301 and the signal suppression unit 206. When the input image signal is obtained (S1401), the image characteristic obtainment unit 1301 performs an edge detecting processing using a predetermined method (S1402). The edge processing is performed for each region made of one or more pixels. Next, for each unit by which the high frequency band suppression is controlled, it is judged whether or not the area includes an edge (S1403). As a basis of the judgement, the following method is used, the method determining a region as the edge region if the pixesl judged that the edge is included, for example, in the processing unit, is more than the predetermined amount. Note that the method for edge judgement is not limited to the method unless an edge part can be judged. Then, when the region is judged as non-edge region, a variance within the processing unit of the high frequency band suppression is calculated (S1404). Note that not limiting to the variance, it is allowed if the steps S1404 and S1405 have a standard of judging an amount of the high frequency components. For example, it may be a method of performing a same processing as in the case where the variance is large if the amount of data in the high frequency band is large when the orthogonal transformation is performed. Next, when it is judged at Step 1403 that the image includes an edge, a filter number for a predetermined edge region is set as a suppression filter (S1406). The edge suppression filter can be a filter which smoothly transforms a steep edge, the filter being set for each direction of the edge and selected for the direction of the edge. In this case, a selected filter number is also determined. Following that, at S1405, the predetermined high frequency band suppression filter number is set when the image is judged to have large variance, that is, a large number of high frequency components (S1407). The high frequency band suppression filter strongly suppresses the high frequency components. Depending on the filter intensity, the plurality of filters may be set. As well as in this case, the selected filter number is determined. When it is judged that the image whose variance is small has a small amount of high frequency components, a predetermined filter for low frequency is set (S1408). The low-pass filter indicates a filter which rarely suppresses the high frequency signal or no filter. It is allowed to have the plurality of the low-pass filters unless determining a selected filter number for each low-pass filter.

A mode signal is generated from the filter number set as described above (S1409), transmitted, as the mode control signal 1302, to the high frequency band suppression unit 102 where the high frequency band of the signal is suppressed and coded as explained in the second embodiment.

Here, in FIG. 16, a characteristic of the image is divided into three types. However, it is not limited to the three types. For example, other combinations such as a combination of an image including an edge with the others are possible. Accordingly, an amount of the processing can be reduced. Also, as a characteristic of the image, using a characteristic of a region where is virtually conspicuous, a subjective image quality is improved by not filtering the compression filter to the region where is virtually conspicuous.

In addition, as a characteristic of the image, the processing may be categorized depending only on the variance. Accordingly, the amount of the processing can be largely reduced.

Note that, the other parts where are not explained in the present embodiment perform the same operation as in the second embodiment. Also, as a reconstruction filter for each characteristic shown in FIG. 16, i ) for a reconstruction filter for the edge region, in accordance with a direction of the edge, a filter to steeply raise the signal is selected; ii ) for a reconstruction filter for a region where has a large amount of frequency components, a filter which highly raises the high frequency band is selected; and iii) for a reconstruction filter for a region where has a small amount of high frequency components, a filter which rarely changes the high frequency band is selected.

As described above, using the present embodiment, the degree of suppressing the high frequency band according to the characteristic of the image can be controlled and the image quality can be improved.

(First Modified Example of Third Embodiment)

The third embodiment is allowed to be modified as follows in a range of practice.

The modification is that additional information is predicted from the decoded image information to the decoded image characteristic obtainment unit without having the additional information coding unit 501 and the additional information decoding unit 506 in the configuration shown in FIG. 15 and transmitting the additional information.

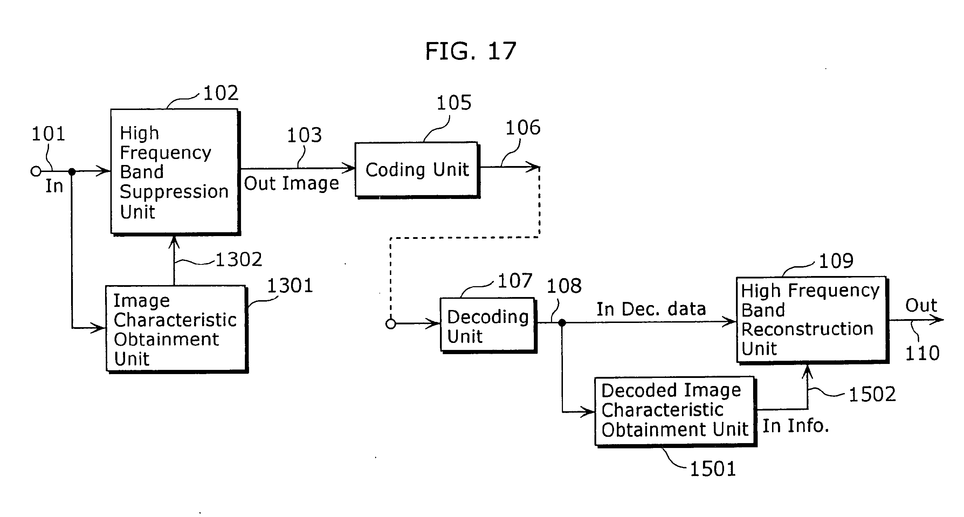

It is explained in detail with reference to a block diagram FIG. 17 explaining a configuration of the third embodiment.

FIG. 17 is a block diagram explaining about a moving picture coding apparatus and a moving picture decoding apparatus configured by removing the additional information coding unit 501 and the additional information decoding unit 506 shown in FIG. 15 and adding a decoded image characteristic obtainment unit 1501.

The decoded picture characteristic obtainment unit 1501 outputs a degree of predictive high frequency band suppression 1502 based on the inputted decoding image signal 108.

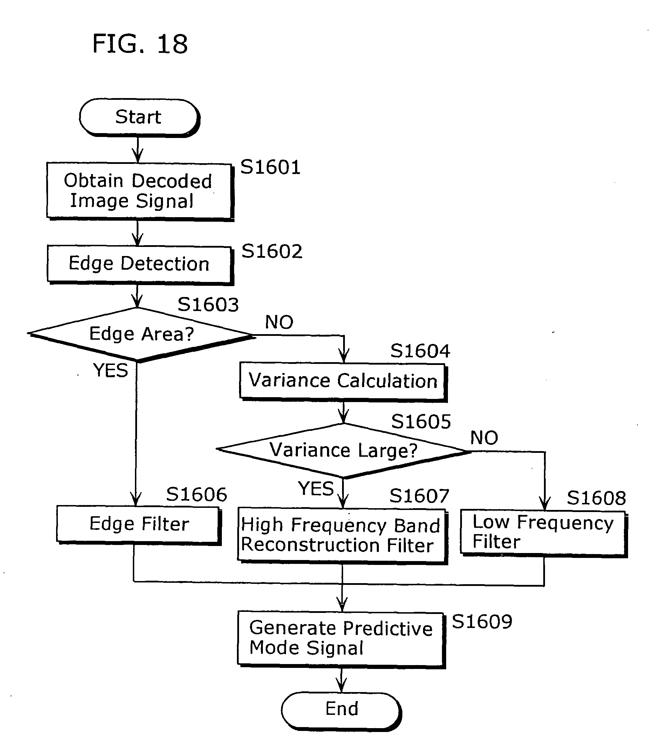

An example of an actual operation of the modified example is explained in detail with references to FIG. 17 and FIG. 18.

FIG. 18 is a flowchart indicating an example of a processing of the decoded image characteristic obtainment unit 1501 and the high frequency band reconstruction unit 109. When the decoded image signal is obtained (S1601), the decoded image characteristic obtainment unit 1501 firstly performs an edge detection processing by a predetermined method (S1602). The edge processing is performed similarly in the image characteristic obtainment unit 1301. Next, for each region for controlling the high frequency band suppression, it is judged that whether or not the region includes an edge (S1603). As a basis of the judgement, a following method is used, the method determining the region as the edge region if the pixels judged that the edge is included in the processing unit of the high frequency band suppression are more than the predetermined amount. Note that, not limiting to the method, it is allowed unless the method can judge an edge part. Further, a threshold used for the judgement is set for easily judging an edge even a part of the decoded image characteristic obtainment unit 1501 of the edge is smooth. Then, when the region is judged that it is not an edge region, a variance in a unit of the processing for the high frequency band is calculated (S1604). Following that, it is judged whether or not the variance is larger than a predetermined value (S1605). Note that, similar to the case shown in FIG. 16, not limiting to the variance, it is allowed if steps of S1604 and S1605 have a standard for judging the amount of the high frequency components. For example, a method of performing a same processing as in the case of a large variance if an orthogonal transformation is performed and an amount of data in the high frequency band is large. Next, in the case where an image is judged at step S1603 that it includes an edge, a filter number for a predetermined edge region is set as a filter for a reconstruction (S1606). The filter for the edge region may be a filter for transforming a smooth edge to a steep, the filter being set for each direction of the edge and changed for each direction of the edge. In this case, a selected filter number is also determined. Next, when it is judged at step S1605 that the variance is large, that is, that the image has a large amount of high frequency components, a predetermined high frequency band reconstruction filter number is set (S1607). The high frequency band reconstruction filter is a filter that intensely reconstructs the high frequency components. The plurality of the high frequency band reconstruction filters can be set according to the filter intensity. Also in this case, a selected filter number is determined. When it is judged at step S1605 that the variance is small, that is, that the image has a small number of the high frequency components, a predetermined filter for the low frequency is set (S1608). The low-pass filter indicates a filter that rarely reconstructs the high frequency signal and does not filter. While the plurality of the filters can be set, a selected filter number is determined.

A predictive mode signal is generated from the filter number set as above described (S1609) and transmitted, as the predictive high frequency band suppression degree 1502, to the high frequency band reconstruction unit 109 where the generated signal is high frequency band reconstructed and coded as explained in the second embodiment.

Note that, the characteristic of the image is divided into three types in FIG. 18. However, similar to the explanation in FIG. 16, the characteristic does not limit to those. For example, combinations such as a combination of an image including an edge with the others are possible. Accordingly, the amount of processing can be reduced. In addition, information of a motion vector at the time of decoding can be used as an image characteristic. For example, when the motion is small, the high frequency band is likely to be conspicuous so that a same filter for a large amount of high frequency components is used. On the other hand, when the motion is big, the information about the high frequency components are lost so that a division can be performed using a filter which rarely reconstruct the high frequency band. Also, the characteristics may be categorized based only on the variance of the image. Accordingly, the amount of the processing can be largely reduced. Here, other parts where the modified example of the present embodiment performs same operations as described in the second embodiment.

As described above, using the modified example of the present embodiment, the degree of high frequency band suppression according to the characteristic of the image is controlled so as to improve the image quality. In addition, the mount of information to be transmitted can be reduced.

Here, in the modified example of the present embodiment, the image characteristic obtainment unit 1301 at the coding side performs mode control. However, it is not limited to the above. For example, as explained in the first embodiment, the high frequency band reconstruction processing according to the characteristic of the image may be performed on the image whose mode is not controlled. In this case, the mode information is not necessarily coded so that the amount of the generated coding can be reduced. Also, by predicting the mode, the high frequency band can be reconstructed and the picture quality is improved. Note that, in the first, second, third embodiments and the present modified example, a prediction method of the mode may be changed by a unit of the processing. Accordingly, for example, when the decoded image characteristic obtainment unit 1501 can predict the mode, the mode information is not coded. When the prediction is impossible, the mode information can be coded and the amount of the generated coding is reduced and the image quality is improved.

(Fourth Embodiment)

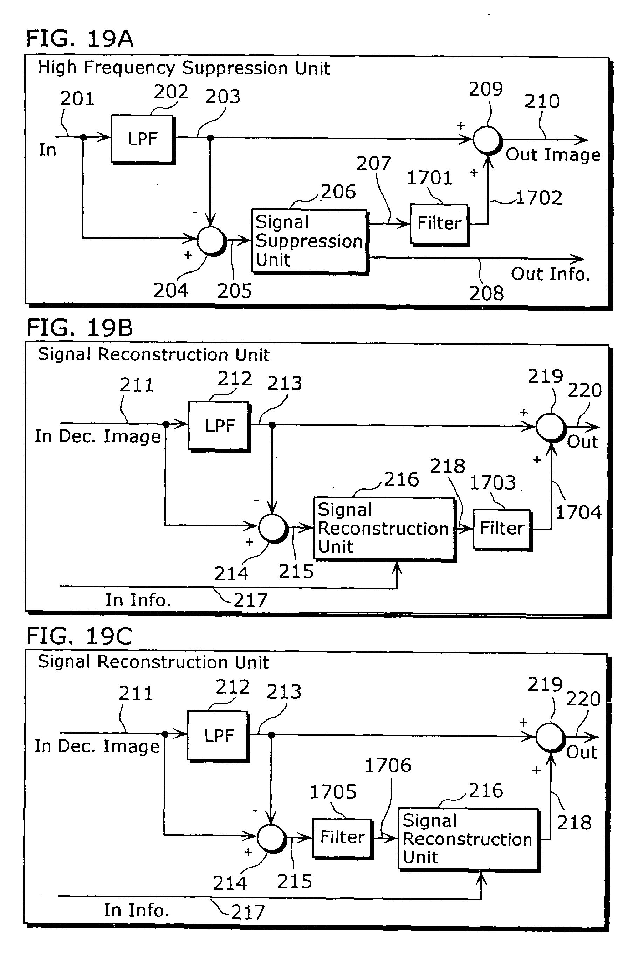

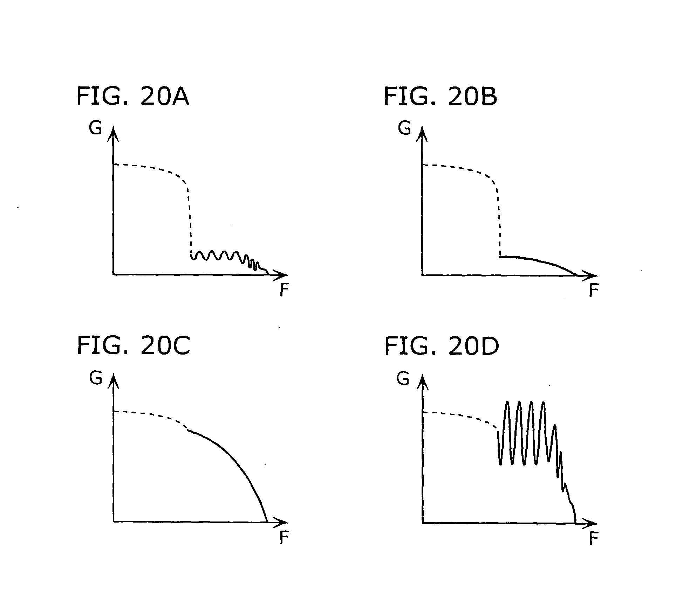

With references to FIG. 19A and FIGS. 20A to 20D, a high frequency band suppression unit 102 of the moving picture coding apparatus as in the fourth embodiment of the present invention is explained. The moving picture decoding apparatus may have any one of the configurations in the first to third embodiments. As similar to the first to third embodiments, to be concise, the signal suppression processing and the signal reconstruction are explained as a processing of an image signal in the second dimension in a horizontal direction on a screen.

FIG. 19A is a block diagram explaining about a configuration of the high frequency band suppression unit 102 included in the moving picture coding apparatus. The moving picture coding apparatus may have any one of the configurations explained in the first to third embodiments.

FIG. 19A shows a high frequency band suppression unit 102 having a high frequency band smoothing filter 1701 in addition to the configuration shown in FIG. 4A. The high frequency band smoothing filter 1701 smoothes the inputted high frequency band suppressed high frequency image signal 207 and outputs a high frequency suppression smoothed high frequency image signal 1702.

In FIG. 19A, an operation of the signal suppression unit 102 is explained.

The high frequency band suppression unit 102 shown in FIG. 19A performs low frequency transmission filtering on the input image signal 201 with the low-pass filter 202, controls data of the high frequency band of the image signal, and outputs the high frequency band suppression smoothed high frequency image signal 1702. Next, the calculation unit 204 calculates a difference between the input image signal 201 and the low frequency image signal 203. Consequently, the high frequency image signal 204 which is a signal only for the high frequency band of the image signal 205 is outputted. The high frequency image signal 205 is a signal in the high frequency band of the input image signal 201. Following that, the signal suppression unit 206 suppresses the signal intensity of the high frequency image signal 205 and outputs the high frequency band suppressed high frequency image signal 207. The high frequency band smoothing filter 1701 smoothes the high frequency band suppressed high frequency image signal 1702 and outputs the high frequency band suppression smoothed high frequency image signal 1702. The calculation unit 209 outputs the high frequency band suppressed image signal 201 whose high frequency band is reduced by the signal suppression unit 206 by adding the high frequency band suppression smoothed high frequency image signal 1702 to the low frequency image signal 203 which is a signal of the low frequency band of the input image signal. The high frequency suppressed image signal 210 is processed for moving picture coding and transmitted. Further, the signal suppression unit 206 outputs the degree of high frequency band suppression 208 which is a degree of suppressing the high frequency band and the outputted information is transmitted.

With references to FIGS. 20A to 20D, it is explained in detail about an operation of the high frequency band smoothing filter that performs an operation different from that in the first to third embodiments.

FIG. 20A indicates a frequency characteristic of the high frequency band suppressed high frequency image signal 207 in the case where a noise whose amplitude is large is included in the high frequency band of the signal. FIG. 20B indicates the high frequency band suppression smoothed high frequency image signal. FIG. 20C indicates a frequency characteristic of the high frequency band suppressed high frequency image signal which is what the high frequency band suppression smoothed high frequency image signal is reconstructed by the high frequency band reconstruction unit 109 described in the first to third embodiments. FIG. 20D indicates a frequency characteristic of the high frequency band reconstruction high frequency image signal which is what the high frequency band suppressed high frequency image signal is reconstructed by the high frequency band reconstruction unit 109 described in the first to third embodiments. Note that, a signal indicated in a dashed line in FIGS. 20A to 20D indicates an image signal in the low frequency.

The high frequency band smoothing filter smoothes the high frequency band suppressed high frequency image signal shown in FIG. 20A. After the smoothing, as shown in FIG. 20B, the image signal in the high frequency band is smoothed. Then, the low frequency image signal indicated by the dashed line is added to the high frequency band suppression smoothing image signal, and the added signal is coded and transmitted. The coded image signal is decoded the decoded image signal after the reconstruction processing outputs a signal having the frequency characteristic shown in FIG. 20C. For example, when there is no high frequency band smoothing filter of the present embodiment, the signal shown in FIG. 20A obtains the reconstructed image signal shown in FIG. 20D where the noise in the high frequency band is emphasized and the picture quality is deteriorated.

In the present embodiment, an effect of improving the image quality is obtained especially in the case where the noise with large amplitude is in the high frequency band as shown in FIG. 20A.

Note that, the present embodiment is explained applying to the high frequency band suppression unit 102 of the first embodiment. However, the explanation of the present embodiment is not limited to it. For example, it may include the suppression filter control unit 602 explained in FIG. 8 in addition to the block diagram showing a configuration of the present embodiment explained in FIG. 19A. The same effect is obtained in the second and third embodiments.

Here, the high frequency band smoothing filter is not necessarily used for all cases. For example, the high frequency band smoothing filtering may be performed only in the case where it is judged that the noise with large amplitude is found in the high frequency band. In this case, the image quality can be improved by reducing the amount of the processing and by not smoothing the image which does not require the smoothing.

(First Modified Example of Fourth Embodiment)

The following modification is allowed in a range of the practice of the fourth embodiment.

The modification is that, instead of having a high frequency band smoothing filter in the high frequency band suppression unit 102 shown in FIG. 19A explaining the configuration of the fourth embodiment, the high frequency band reconstruction unit 109 has the reconstructed high frequency band smoothing filter.

The configuration of the modification is explained with references to FIG. 19C and FIGS. 20A to 20D.

FIG. 19B is a block diagram explaining a configuration of the high frequency band reconstruction unit made of the moving picture decoding apparatus. The moving picture reconstruction unit may have any one of the configuration explained in the first to third embodiments.

FIG. 19B shows a configuration of the high frequency band reconstruction unit which has a high frequency band smoothing filter 1703 in addition to the configuration shown in FIG. 4B. The reconstruction high frequency band smoothing filter 1703 smoothes the inputted high frequency band reconstructed high frequency image signal 218 and outputs a reconstructed high frequency band smoothing high frequency image signal 1704.

In FIG. 19B, an operation of the high frequency band reconstruction unit 109 is explained.

The high frequency band reconstruction unit 109 shown in FIG. 19B outputs the low frequency image signal 213 by performing a low-pass transmission filtering process on the decoded image signal 211 with the low-pass filter 212 and suppressing data of the high frequency band region of the image signal. Next, the calculation unit 214 calculates a difference between the decoded image signal 211 and the low frequency image signal 213 so that the high frequency image signal 215 which is a signal only for the high frequency band of the image signal is outputted similar to the high frequency band suppression unit 102. The high frequency image signal 215 is a signal for the high frequency band of the decoded image signal 211. Next, the signal reconstruction unit 216 reconstructs the intensity of the high frequency image signal 215 according to the high frequency band suppression degree 217 and the high frequency band reconstructed high frequency image signal 218 is outputted. The high frequency band reconstructed high frequency image signal 218 is smoothed through the reconstruction high frequency band smoothing filter 1703 and the reconstructed high frequency band smoothing high frequency image signal 1704 is outputted. The calculation unit 219 adds the reconstructed high frequency band smoothing high frequency band image signal 1704 to the low frequency image signal 213 which is a signal for the low frequency of the decoding signal and the reconstructed image signal 220 is outputted.

With references to FIGS. 20A, 20C, and 20D, an operation of the reconstruction high frequency band smoothing filter is explained in detail.

FIG. 20A indicates a frequency characteristic of the high frequency band reconstructed high frequency image signal 215 when the noise with large amplitude is included in the high frequency band. FIG. 20D indicates the reconstructed high frequency band smoothing high frequency image signal 218. FIG. 20C indicates a frequency characteristic of the reconstructed high frequency band smoothing high frequency image signal 1704 which is what the reconstructed high frequency band smoothing high frequency image signal shown in FIG. 20D is smoothed through the reconstruction high frequency band smoothing filter 1703.

The reconstruction high frequency band smoothing filter smoothes the reconstruction high frequency band smoothed high frequency image signal shown in FIG. 20D. As shown in FIG. 20C, the image signal in the high frequency band is smoothed after the smoothing. Then, the low frequency image signal indicated by the dashed line is added to the high frequency band suppressed smoothing image signal and the added signal is outputted as a reproduced image.

Accordingly, in the modified example of the present invention, an effect of improving the image quality is obtained especially in the case where noise with large amplitude is found in the high frequency band of the decoded image signal as shown in FIG. 20A.

Here, the reconstruction high frequency band smoothing filter is not necessarily used for all cases. For example, the reconstruction high frequency band smoothing filtering may be performed only in the case where it is judged that the noise with large amplitude is found in the high frequency band as shown in FIG. 20A. In this case, the quality of the image can be improved by reducing the amount of processing and by not smoothing the image which does not need to be smoothened.

(Second Modified Example of Fourth Embodiment)

The following modification is allowed in a range of the practice of the fourth embodiment.

The modification is that the high frequency band smoothing filter for an image before the high frequency band reconstruction is set as shown in the high frequency band reconstruction unit 109 shown in FIG. 19C instead of having the high frequency band smoothing filter for an image after the reconstruction of the high frequency band reconstruction unit 109 shown in FIG. 19B explaining a configuration of the fourth embodiment.

With references to FIG. 19C and FIGS. 20A to 20D, the configuration of the modified example is explained in detail.

FIG. 19C is a block diagram explaining about the configuration of the high frequency band reconstruction unit 109 made of the moving picture decoding apparatus. The moving picture reconstruction unit may have any one of the configurations explained in the first to third embodiments.

FIG. 19C shows a high frequency band reconstruction unit 109 including a decoded high frequency band smoothing filter 1705 in addition to the configuration shown in FIG. 4B. The decoded high frequency band smoothing filter 1705 smoothes the inputted high frequency image signal 215 and outputs a decoded high frequency band smoothed high frequency image signal 1706.

In FIG. 19C, an operation of the high frequency band reconstruction unit 109 is explained.

The high frequency band reconstruction unit 109 shown in FIG. 19C suppresses data in the high frequency band of the image signal, and outputs the low frequency image signal 213 by performing a low frequency transmission filtering on the decoded image signal 211 through the low-pass filter 212. Next, the calculation unit 214 calculates a difference between the decoded image signal 211 and the low frequency image signal 213 so that the high frequency image signal 215 which is a signal only for the high frequency band of the image signal is outputted similar to the high frequency band suppression unit 102. The high frequency image signal 215 is smoothed through the decoded high frequency band smoothing filter and a decoded high frequency band smoothed high frequency image signal is outputted. Following that, the signal reconstruction unit 216 reconstructs the signal intensity of the decoded high frequency band smoothed high frequency image signal 1706 according to the high frequency band suppression degree 217 and outputs the high frequency band reconstructed high frequency image signal 218. The calculation unit 219 adds the high frequency reconstructed high frequency image signal 218 to the low frequency image signal 213 which is a signal for the low frequency band of the decoded image signal so that the reconstructed image signal 220 is outputted.

With references to FIGS. 20A, 20B, and 20C, an operation of the decoding high frequency band smoothing filter is explained in detail.

FIG. 20A indicates a frequency characteristic of the high frequency band reconstructed high frequency image signal 215 in the case where the noise with large amplitude is found in the high frequency band. FIG. 20B indicates a frequency characteristic of the decoded high frequency band smoothed high frequency image signal 1706 which is what the high frequency band reconstructed high frequency image signal is smoothed through the decoded high frequency band smoothing filter. FIG. 20C indicates a frequency characteristic of the high frequency band reconstructed high frequency image signal 218 which is what the signal reconstruction unit 216 reconstructs the decoded high frequency band smoothed high frequency image signal shown in FIG. 20B.

The decoded high frequency band smoothing filter smoothes the decoded high frequency band smoothed high frequency image signal shown in FIG. 20A. As shown in FIG. 20B, the image signal in the high frequency band is smoothed after the smoothing. Then, the high frequency band suppression smoothed image signal is reconstructed; the high frequency band reconstructed high frequency image signal is obtained; and the high frequency image signal indicated by the dashed line in FIG. 20C is added to the obtained and outputted as a reproduced image.

Accordingly, in the modified example of the present invention, an effect of improving the quality of the image is obtained especially in the case where the noise with large amplitude is found in the high frequency band as shown in FIG. 20A.

Note that, the decoded high frequency band smoothing filter is not necessarily used for all cases. For example, the decoded high frequency band smoothing filtering may be performed only when it is judged that the noise with large amplitude is found in the high frequency band as shown in FIG. 20A. In this case, the quality of the image can be improved by reducing the amount of the processing and not by smoothing the image which does not need the smoothing.

(Fifth Embodiment)

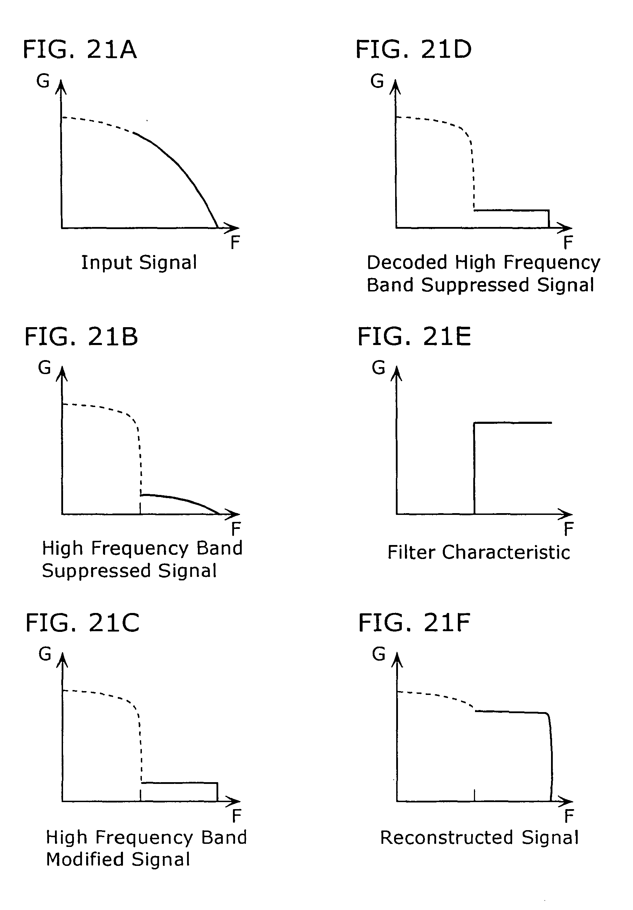

With references to FIG. 21A to 21F, it is explained about the high frequency band suppression unit 102 of the moving picture coding apparatus for the fifth embodiment of the present invention is explained. The moving picture decoding apparatus may have any one of the configurations described in the first to third embodiments. Similar to the first to fourth embodiments, to be concise, the signal suppression processing and the signal reconstruction processing are explained as a processing of a two dimensional image signal in a horizontal direction on a screen.

In the present embodiment, the operations of the signal suppression unit 206 and the signal reconstruction unit 216 in the first to fourth embodiments differ. With references to FIGS. 21A to 21F, the operations of the signal suppression unit 206 and the signal reconstruction unit 216 of the present embodiment is explained in detail.

FIG. 21A indicates a frequency characteristic of the input image signal. FIG. 21B indicates the high frequency band suppressed high frequency image signal. FIG. 21C indicates a high frequency band modified high frequency image signal generated by the signal suppression unit 206 of the present embodiment. It is a signal by which the high frequency band suppressed high frequency image signal is indicated by one signal intensity, the signal calculated, for example, by an average or a median of the amplitude of the high frequency band suppressed image signal. Note that, the calculation method is not limited to the above. The signal suppression unit 206 of the present embodiment outputs the high frequency band modified high frequency image signal by replacing to the high frequency band suppressed high frequency image signal and outputs, as a high frequency band suppression degree, a representative value indicated by one signal intensity.

FIG. 21D indicates a signal that the decoded image signal transmitted in the present embodiment is decoded. The signal reconstruction unit 216 in the present embodiment reconstructs the signal with a filter having the filter characteristic shown in FIG. 21E. The filter intensity determines a value transmitted as a high frequency band suppression degree or a value smaller than the value as intensity. FIG. 21F indicates an example of which the signal shown in FIG. 21D is reconstructed.

Using the high frequency band suppression unit 102 and the high frequency band reconstruction unit 109 of the present embodiment, the additional information including a degree of signal suppression to be transmitted can be reduced and the amount of the processing at the reconstruction is reduced. Further, it is prevented that the amount of high frequency components becomes too large and the quality of the image is improved by determining the intensity of the filter for the reconstruction at lower than the suppressed intensity.

Note that, the present embodiment is applicable to the first to fourth embodiments. Therefore a similar result is obtained in any cases.

(Sixth Embodiment)

In addition, by recording a program for realizing the layout of the moving picture coding method or the moving picture decoding method as shown in each of the above-mentioned embodiments, on a recording medium such as a flexible disk, it becomes possible to perform the processing as shown in each of the above embodiments easily in an independent computer system.

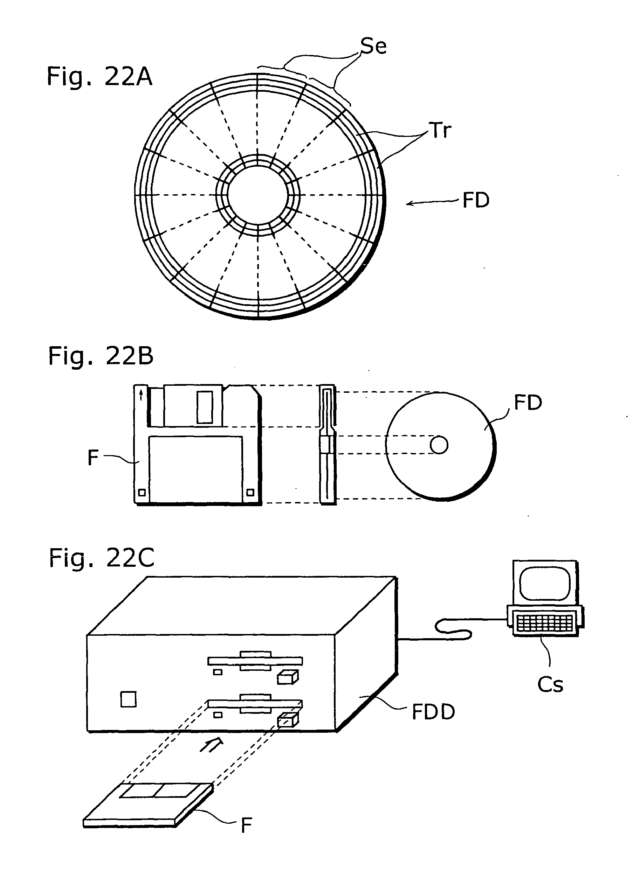

FIGS. 22A to 22C are diagrams of a recording medium for recording a program for realizing the moving picture coding method and the moving picture decoding method in the above embodiments in the computer system.

FIG. 22B shows the front view of a flexible disk and the schematic cross-section, as well as a flexible disk itself, whereas FIG. 22A shows an example of a physical format of the flexible disk as a recording medium itself. A flexible disk FD is contained in a case F, a plurality of tracks Tr are formed concentrically on the surface of the disk in the radius direction from the periphery, and each track is divided into 16 sectors Se in the angular direction. Therefore, in the flexible disk storing the above-mentioned program, the above program are recorded in an area allocated for it on the above flexible disk FD

In addition, FIG. 22C shows the configuration for recording and reproducing the program on and from the flexible disk FD. When the program is recorded on the flexible disk FD, the computer system Cs writes in the moving picture coding method and the moving picture decoding method as the program on the flexible disk FD via a flexible disk drive. When the above moving picture coding method and the moving picture decoding method are constructed in the computer system using the program recorded on the flexible disk, the program is read out from the flexible disk via the flexible disk drive and transferred to the computer system.

Note that the above explanation is made on an assumption that a recording medium is a flexible disk, but the same processing can also be performed using an optical disk. In addition, the recording medium is not limited to these, but any other mediums such as a CD-ROM, memory card, and a ROM cassette can be used in the same manner if a program can be recorded on them.

(Seventh Embodiment)

Further, the applications of the moving picture coding apparatus and the moving picture decoding apparatus illustrated in the above embodiments and a system using them shall be explained here.

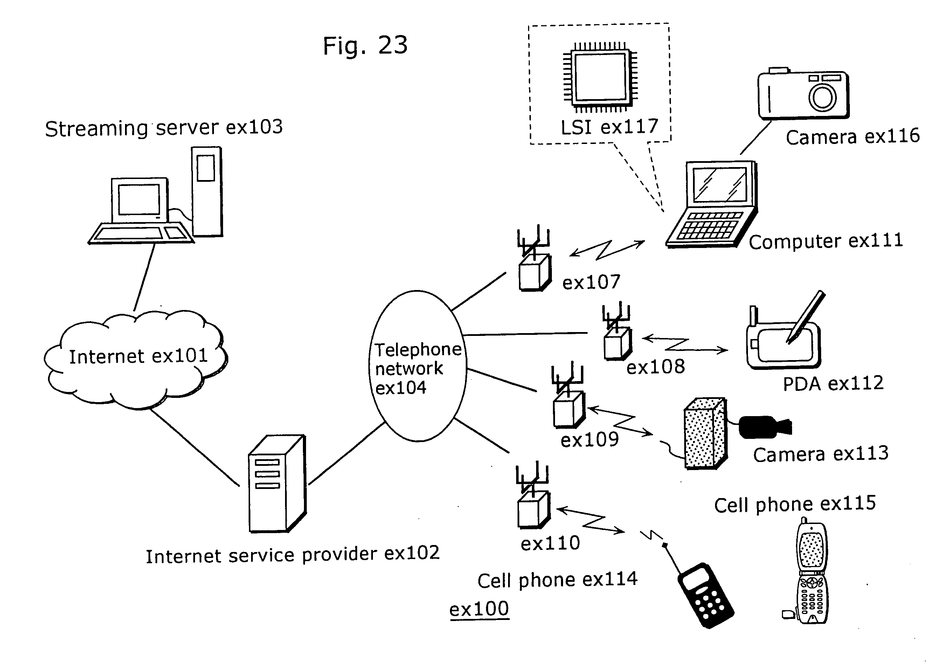

FIG. 23 is a diagram showing the overall configuration of a content providing system ex100 for realizing content distribution service. The area for providing communication service is divided into cells of desired size, and base stations ex107 to ex110 which are fixed wireless stations are placed in respective cells.

In this content providing system ex100, various devices such as a computer ex111, a personal digital assistant (PDA) ex112, a camera ex113, a cell phone ex114 and a camera-equipped cell phone ex115 are connected to the Internet ex101, via an Internet service provider ex102, a telephone network ex104 and base stations ex107 to ex110, for example.

However, the content providing system ex100 is not limited to the combination as shown in FIG. 23, and may be connected to a combination of any of them. Also, each device may be connected directly to the telephone network ex104, not through the base stations ex107 to ex110 which are the fixed wireless stations.

The camera ex113 is a device such as a digital video camera capable of shooting moving pictures. The cell phone may be any of a cell phone of a Personal Digital Communications (PDC) system, a Code Division Multiple Access (CDMA) system, a Wideband-Code Division Multiple Access (W-CDMA) system or a Global System for Mobile Communications (GSM) system, a Personal Handyphone System (PHS) and the like.

Also, a streaming server ex103 is connected to the camera ex113 via the base station ex109 and the telephone network ex104, which realizes live distribution or the like using the camera ex113 based on the coded data transmitted from the user. The coding of the data shot by the camera may be performed by the camera ex113, the server for transmitting the data, or the like. Also, the moving picture data shot by a camera ex116 may be transmitted to the streaming server ex103 via the computer ex111. The camera ex116 is a device such as a digital camera capable of shooting still and moving pictures. In this case, either the computer ex111 or the camera ex116 may code the moving picture data. An LSI ex117 included in the computer ex111 or the camera ex116 performs the coding processing. Note that software for coding and decoding moving pictures may be integrated into any type of a recording medium (such as a CD-ROM, a flexible disk and a hard disk) that is readable by the computer ex111 or the like. Furthermore, the camera-equipped cell phone ex115 may transmit the moving picture data. This moving picture data is the data coded by the LSI included in the cell phone ex115.

In this content providing system ex100, contents (such as a video of a live music performance) shot by users using the camera ex113, the camera ex116 or the like are coded in the same manner as in the above embodiments and transmitted to the streaming server ex103, while the streaming server ex103 makes stream distribution of the above content data to the clients at their request. The clients include the computer ex111, the PDA ex112, the camera ex113, the cell phone ex114, and the like, capable of decoding the above-mentioned coded data. The content providing system ex100 is a system in which the clients can thus receive and reproduce the coded data, and further can receive, decode and reproduce the data in real time so as to realize personal broadcasting.

When each apparatus in this system performs coding or decoding, the moving picture coding apparatus or the moving picture decoding apparatus shown in each of the above-mentioned embodiments may be used.

A cell phone is now explained as an example thereof.

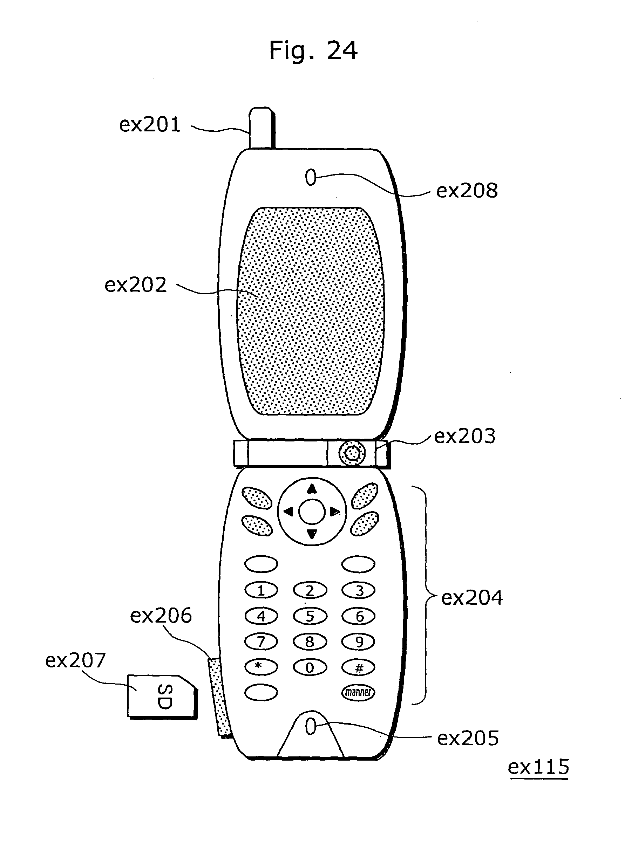

FIG. 24 is a diagram showing a cell phone ex115 which uses the moving picture coding method (in here, image coding unit) and the moving picture decoding method (in here, image decoding unit) as explained in the above embodiments. The cell phone ex115 has an antenna ex201 for communicating radio waves with the base station ex110, a camera unit ex203 such as a CCD camera capable of shooting moving and still pictures, a display unit ex202 such as a liquid crystal display for displaying the data obtained by decoding video shot by the camera unit ex203, video received by the antenna ex201, or the like, a main body including a set of operation keys ex204, a voice output unit ex208 such as a speaker for outputting voices, a voice input unit ex205 such as a microphone for inputting voices, a recording medium ex207 for storing coded or decoded data, such as data of moving or still pictures shot by the camera, and data of text, moving pictures or still pictures of received e-mails, and a slot unit ex206 for attaching the recording medium ex207 into the cell phone ex115. The recording medium ex207 includes a flash memory element, a kind of Electrically Erasable and Programmable Read Only Memory (EEPROM) that is an electrically rewritable and erasable nonvolatile memory, in a plastic case such as an SD card.

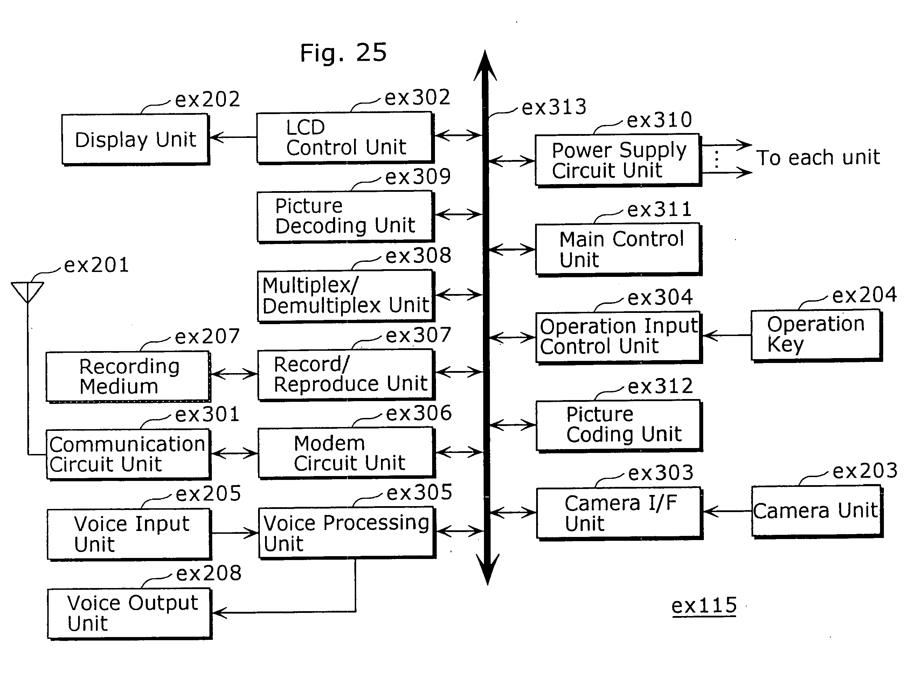

Further, the cell phone ex115 is explained with reference to FIG. 25. In the cell phone ex115, a power supply circuit unit ex310, an operation input control unit ex304, a picture coding unit ex312, a camera interface unit ex303, an Liquid Crystal Display (LCD) control unit ex302, a picture decoding unit ex309, a multiplex/demultiplex unit ex308, a record/reproduce unit ex307, a modem circuit unit ex306 and a voice processing unit ex305, are connected to a main control unit ex311, and to each other, via a synchronous bus ex313. The main control unit ex311 is for the overall controlling of each unit of the main body including the display unit ex202 and the operation keys ex204.

When a call-end key or a power key is turned ON by a user's operation, the power supply circuit unit ex310 supplies the respective units with power from a battery pack so as to activate the camera-equipped digital cell phone ex115 to a ready state.

In the cell phone ex115, under the control of the main control unit ex311 including a CPU, ROM, RAM and the like, the voice processing unit ex305 converts the voice signals received by the voice input unit ex205 in conversation mode into digital voice data, the modem circuit unit ex306 performs spread spectrum processing of the digital voice data, and the communication circuit unit ex301 performs digital-to-analog conversion and frequency transformation of the data, so as to transmit the result via the antenna ex201. Also, in the cell phone ex115, the communication circuit unit amplifies the data received by the antenna ex201 in conversation mode and performs the frequency transformation and an analog-to-digital conversion; the modem circuit unit ex306 performs inverse spread spectrum processing of the data; and the voice processing unit ex305 converts it into analog voice data, so as to output the result via the voice output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs a digital-to-analog conversion and frequency transformation for the text data, the data is transmitted to the base station ex110 via the antenna ex201.

When image data is transmitted in data communication mode, the picture data shot by the camera unit ex203 is provided to the picture coding unit ex312 via the camera interface unit ex303. When the image data is not transmitted, the picture data shot by the camera unit ex203 can also be displayed directly on the display unit 202 via the camera interface unit ex303 and the LCD control unit ex302.

The picture coding unit ex312, including the moving picture coding apparatus explained in the present invention, compresses and codes the picture data provided from the camera unit ex203 by the coding method used for the moving picture coding apparatus as shown in the above-mentioned embodiments so as to transform it into coded image data, and sends it out to the multiplex/demultiplex unit ex308. At this time, the cell phone ex115 sends out the voices received by the voice input unit ex205 during the shooting by the camera unit ex203, to the multiplex/demultiplex unit ex308 as digital voice data via the voice processing unit ex305.

The multiplex/demultiplex unit ex308 multiplexes the coded image data provided from the picture coding unit ex312 and the voice data provided from the voice processing unit ex305 using a predetermined method, and the modem circuit unit ex306 then performs spread spectrum processing of the multiplexed data obtained as the result, and the communication circuit unit ex301 performs digital-to-analog conversion and frequency transformation on the result, for the transmission via the antenna ex201.

As for receiving data of a moving picture file which is linked to a Website or the like in data communication mode, the modem circuit unit ex306 performs inverse spread spectrum processing of the data received from the base station ex110 via the antenna ex201, and sends out the multiplexed data obtained as the result to the multiplex/demultiplex unit ex308.

In order to decode the multiplexed data received via the antenna ex201, the multiplex/demultiplex unit ex308 demultiplexes the multiplexed data into a coded bit stream of image data and a coded bit stream of voice data, and provides the coded image data to the picture decoding unit ex309 and the voice data to the voice processing unit ex305, respectively via the synchronous bus ex313.

Next, the picture decoding unit ex309, including the moving picture decoding apparatus explained in the present invention, decodes the coded bit stream of the image data using the decoding method corresponding to the coding method as shown in the above-mentioned embodiments, so as to generate reproduced moving picture data, and provides this data to the display unit ex202 via the LCD control unit ex302, and thus moving picture data included in a moving picture file linked to a Website, for instance, is displayed. At the same time, the voice processing unit ex305 converts the voice data into analog voice data, and provides this data to the voice output unit ex208, and thus voice data included in the moving picture file linked to a Website, for instance, is reproduced.

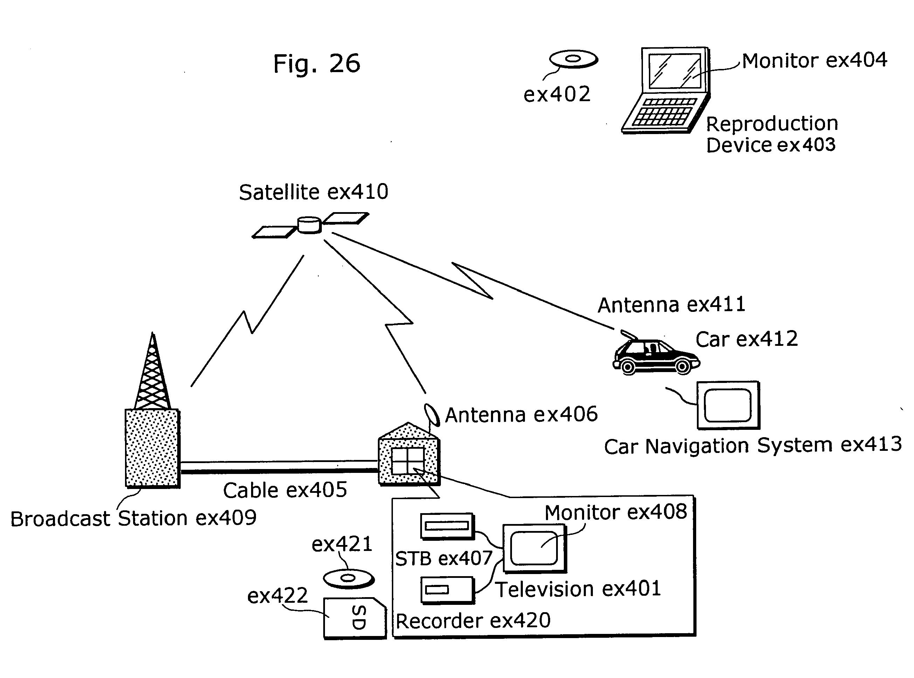

The present invention is not limited to the above-mentioned system since satellite or ground-based digital broadcasting has been in the news lately, and at least either the moving picture coding apparatus or the moving picture decoding apparatus in the above-mentioned embodiments can be incorporated into a digital broadcasting system as shown in FIG. 26. More specifically, a coded bit stream of video information is transmitted from a broadcast station ex409 to a communication or broadcast satellite ex410 via radio waves. Upon receipt of it, the broadcast satellite ex410 transmits radio waves for broadcasting, a home antenna ex406 with a satellite broadcast reception function receives the radio waves, and an apparatus such as a television (receiver) ex401 or a Set Top Box (STB) ex407 decodes the coded bit stream for reconstruction. The moving picture decoding apparatus as shown in the above-mentioned embodiments can be implemented in a reproduction device ex403 for reading and decoding a coded bit stream recorded on a storage medium ex402 such as a CD and DVD that is a recording medium. In this case, the reproduced video signals are displayed on a monitor ex404. It is also conceived to implement the moving picture decoding apparatus in the set top box ex407 connected to a cable ex405 for cable television or the antenna ex406 for satellite and/or ground-based broadcasting so as to reproduce them on a monitor ex408 of the television. The moving picture decoding apparatus may be incorporated into the television, not in the set top box. Also, a car ex412 having an antenna ex411 which can receive signals from the satellite ex410, the base station ex107 or the like, for reproducing moving pictures on a display device such as a car navigation system ex413 or the like in the car ex412.

Furthermore, the moving picture coding apparatus as shown in the above-mentioned embodiments can code picture signals and record them on a recording medium. As a concrete example, there is a recorder ex420 such as a DVD recorder for recording picture signals on a DVD disk ex421 and a disk recorder for recording them on a hard disk. They can also be recorded on an SD card ex422. If the recorder ex420 includes the moving picture decoding apparatus as shown in the above-mentioned embodiments, the picture signals recorded on the DVD disk ex421 or the SD card ex422 can be reproduced for display on the monitor ex408.

As for the configuration of the car navigation system ex413, the configuration without the camera unit ex203, the camera interface unit ex303 and the picture coding unit ex312, out of the units as shown in FIG. 25, is conceivable. The same applies to the computer ex111, the television (receiver) ex401 and others.

Moreover, three types of implementations can be conceived for a terminal such as the above-mentioned cell phone ex114; a communication terminal equipped with both an encoder and a decoder, a sending terminal equipped with an encoder only, and a receiving terminal equipped with a decoder only.

As described above, it is possible to use the moving picture coding method or the moving picture decoding method described in the above embodiments in any of above-mentioned devices and systems, and thus the effects explained in the above embodiments can be obtained.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

**INDUSTRIAL APPLICABILITY**

The moving picture coding apparatus and the moving picture decoding apparatus according to the present invention has an effect capable for highly qualified coding and decoding at a low bit rate, and is useful as the moving picture coding apparatus and the moving picture decoding apparatus in storing, transmission, communication and the like.

**Claims**

1. A moving picture coding apparatus that compresses and codes a moving picture signal, comprising:

   a high frequency band suppression unit operable to suppress a high frequency component of the moving picture signal;
   a coding unit operable to obtain a coded stream by compressing and coding the moving picture signal outputted from the high frequency band suppression unit; and
   an output unit operable to output, together with the coded stream, additional information showing a degree of suppression by the high frequency band suppression unit.

2. The moving picture coding apparatus according to Claim 1, further comprising:

   a decoding unit operable to decode the coded stream so as to obtain a decoded moving picture signal; and
   a high frequency band reconstruction unit operable to reconstruct the decoded moving picture signal by reconstructing a high frequency component of the decoded moving picture signal in a degree of reconstruction corresponding to the degree of suppression by the high frequency band suppression unit.

3. The moving picture coding apparatus according to Claim 2,
   wherein the high frequency band suppression unit and the high frequency band reconstruction unit are configured to have a complementary relationship.

4. The moving picture coding apparatus according to Claim 1,
   wherein the degree of suppression by the high frequency band suppression unit increases as an amount of the high frequency component of the inputted moving picture signal increases.

5. The moving picture coding apparatus according to one of Claims 2 to 4,
   wherein the degree of suppression by the high frequency band suppression unit is determined within an extent to which the high frequency band reconstruction unit can reconstruct the moving picture signal.

6. The moving picture coding apparatus according to one of Claims 2 to 5, further comprising
   an image characteristic judgement unit operable to judge a characteristic of an image of the moving picture signal,
   wherein the degree of suppression by the high frequency suppression unit is determined according to the characteristic of the image judged by the image characteristic judgement unit.

7. The moving picture coding apparatus according to one of Claims 2 to 6, further comprising
   a coding mode obtainment unit operable to obtain a coding mode for the moving picture signal,
   wherein according to the coding mode, the degree of suppression by the high frequency band suppression unit is changed.

8. A moving picture decoding apparatus that decodes a compressed and coded moving picture signal, comprising:

   a decoding unit operable to acquire a coded stream obtained by compressing and coding the moving picture signal and high frequency band reconstruction information related to the moving picture signal, decode the coded stream and output a decoded moving picture signal; and

a high frequency reconstruction band unit operable to reconstruct a high frequency component of the decoded moving picture signal based on the high frequency band reconstruction information.

9. The moving picture decoding apparatus according to Claim 8, wherein the high frequency band reconstruction information has at least one or more reconstruction modes, and the high frequency band reconstruction unit changes a degree of reconstruction depending on the reconstruction mode.

10. The moving picture decoding apparatus according to Claim 9, wherein the high frequency band reconstruction unit adds predetermined high frequency information according to the reconstruction mode.

11. The moving picture decoding apparatus according to Claim 8, further comprising an image characteristic judgement unit operable to judge a characteristic of an image of the decoded moving picture signal, wherein a degree of reconstruction by the high frequency band reconstruction unit is determined according to the characteristic of the image judged by the image characteristic judgement unit.

12. A moving picture coding apparatus that compresses and codes a moving picture signal, comprising:

    a high frequency band suppression unit operable to suppress a high frequency component of the moving picture signal;
    a coding unit operable to obtain coded streams respectively by compressing and coding the moving picture signal outputted from the high frequency band suppression unit and a degree of suppression by the high frequency suppression unit; and
    an output unit operable to output the coded stream showing a degree of suppression corresponding to coding mode information in the output moving picture signal.

13. The moving picture coding apparatus according to Claim 12, wherein only when the degree of suppression by the high frequency suppression unit is changed, the coded stream showing the degree of suppression is outputted.

14. A moving picture coding method of compressing and coding a moving picture signal, the method comprising:

    suppressing a high frequency component of the moving picture signal;
    obtaining a coded stream by compressing and coding the moving picture signal outputted by suppressing high frequency band; and
    outputting additional information showing a degree of suppression by the high frequency band suppression unit.

15. A moving picture decoding method of decoding a compressed and coded moving picture signal, the method comprising:

    acquiring a coded stream obtained by compressing and coding the moving picture signal and high frequency band reconstruction information related to the moving picture signal, decoding the coded stream and outputting the decoded moving picture signal; and
    reconstructing a high frequency band component of the decoded moving picture signal based on the high frequency band reconstruction information.

16. A moving picture coding method of compressing and coding a moving picture signal, the method comprising:

    suppressing a high frequency component of the moving picture signal;
    obtaining coded streams respectively by compressing and coding the moving picture signal outputted by suppressing the high frequency band and the degree of suppression; and
    outputting the coded stream showing the degree of suppression corresponding to coding mode information in the output moving picture signal.

17. A program for a moving picture coding apparatus that compresses and codes a moving picture signal, the program including steps of:

suppressing a high frequency component of the moving picture signal;
obtaining a coded stream by compressing and coding the moving picture signal outputted by suppressing the high frequency band; and
outputting additional information showing a degree of suppression by the high frequency band suppression unit.

18. A program for a moving picture decoding apparatus that decodes a compressed and coded moving picture signal, the program including steps of:

acquiring a coded stream obtained by compressing and coding the moving picture signal and high frequency band reconstruction information related to the moving picture signal, decoding the coded stream and outputting the decoded moving picture signal; and
reconstructing a high frequency band component of the decoded moving picture signal based on the reconstruction information.

19. A program for a moving picture coding apparatus that compresses and codes a moving picture signal, the program including steps of:

suppressing a high frequency component of the moving picture signal;
obtaining coded streams respectively by compressing and coding the moving picture signal outputted by suppressing the high frequency band and the degree of suppression; and
outputting the coded stream showing the degree of suppression corresponding to coding mode information in the output moving picture signal.

EP 1 631 090 A1

# FIG. 1

## FIG. 2A

High Frequency Band Suppressed Signal

## FIG. 2B

Filter Characteristic

## FIG. 2C

Reconstructed Signal

# FIG. 3

EP 1 631 090 A1

101
In

102
High Frequency Band Suppression Unit

103
Out Image

105
Coding Unit

106

104
Out Info.

107
Decoding Unit

108
In Dec. Image

109
High Frequency Band Reconstruction Unit

In Info.

Out

110

FIG. 4A

High Frequency Band Suppression Unit

FIG. 4B

High Frequency Band Reconstruction Unit

EP 1 631 090 A1

FIG. 5A

Input Image Signal

FIG. 5B

Low-pass Filter Characteristic

FIG. 5C

Low Frequency Image Signal

FIG. 5D

High Frequency Image Signal

FIG. 5E

High Frequency Signal Suppression Filter Characteristic

1/g

FIG. 5F

High Frequency Band Suppressed High Frequency Image Signal

FIG. 5G

High Frequency Band Suppressed Image Signal

25

FIG. 6D

High Frequency
Image Signal

FIG. 6C

Low Frequency
Image Signal

FIG. 6G

Reproduced
Image Signal

FIG. 6B

Low-pass Filter
Characteristic

FIG. 6F

High Frequency Band
Reconstructed High
Frequency Image
Signal

FIG. 6A

Decoded Image Signal

FIG. 6E

High Frequency Signal
Reconstruction Filter
Characteristic

26

## FIG. 7

# FIG. 8

High Frequency Band Suppression Unit

201  202  203  209  210

In → LPF → Out Image

Signal Suppression Unit 206

207

205

204

Out Info. 208

Suppression Filter Control Unit 603 602

In Control 601

EP 1 631 090 A1

# FIG. 9

```
        ┌─────────────┐
        │    Start     │
        └─────────────┘
               │              S701
               ▼
    ┌──────────────────────┐
    │  Obtain Image Signal  │
    └──────────────────────┘
               │              S702
               ▼
    ┌──────────────────────┐
    │   Temporal Coding     │
    └──────────────────────┘
               │              S703
               ▼
    ┌──────────────────────┐
    │ Judge High Frequency  │
    │     Information        │
    └──────────────────────┘
               │              S704
               ▼
    ┌──────────────────────┐
    │ Decide High Frequency │
    │    Filter Number      │
    └──────────────────────┘
               │              S705
               ▼
    ┌──────────────────────┐
    │  High Frequency Band  │
    │ Suppression Filtering │
    └──────────────────────┘
               │
               ▼
        ┌─────────────┐
        │     End      │
        └─────────────┘
```

# FIG. 10

| High Frequency Component | Filter Characteristic |
|---|---|
| High | Degree of Suppression:High |
| Medium | Degree of Suppression : Medium |
| Low | Degree of Suppression : Low |

## FIG. 11

EP 1 631 090 A1

## FIG. 12

```
                    ┌──────────────┐
                    │    Start     │
                    └──────┬───────┘
                           ▼
              ┌─────────────────────────┐  S1001
              │   Obtain Image Signal    │
              └────────────┬─────────────┘
                           ▼
              ┌─────────────────────────┐  S1002
              │ High Frequency Band      │
              │ Suppression Filtering    │
              └────────────┬─────────────┘
                           ▼
              ┌─────────────────────────┐  S1003
              │ High Frequency Band      │
              │ Suppressed Signal        │
              │ Temporal Coding          │
              └────────────┬─────────────┘
                           ▼
              ┌─────────────────────────┐  S1004
              │ High Frequency Band      │
              │ Suppressed Signal        │
              │ Temporal Decoding        │
              └────────────┬─────────────┘
                           ▼
              ┌─────────────────────────┐  S1005
              │ High Frequency Band      │
              │ Reconstruction Filtering │
              └────────────┬─────────────┘
                           ▼
              ┌─────────────────────────┐  S1006
              │ Coding Cost Calculation  │
              └────────────┬─────────────┘
                           ▼   S1007
                      ╱─────────╲       YES
                     ╱ Minimum   ╲──────────┐
                     ╲ Cost?     ╱          ▼
                      ╲─────────╱     ┌──────────────────┐ S1008
                        │ NO         │ Hold Minimum Cost/│
                        │            │ Filter Number     │
                        │            └────────┬──────────┘
                        ▼◄───────────────────┘
                      ╱─────────╲  S1009
                     ╱ Tried All ╲    NO    ┌──────────────┐ S1010
                     ╲ Filters?  ╱─────────►│ Filter Change│
                      ╲─────────╱           └──────────────┘
                        │ YES
                        ▼
              ┌─────────────────────────┐  S1011
              │ Output Filter Number for │
              │ Minimum Cost             │
              └────────────┬─────────────┘
                           ▼
                    ┌──────────────┐
                    │     End      │
                    └──────────────┘
```

FIG. 13

```
                    ┌─────────────┐
                   (    Start     )
                    └──────┬──────┘
                           │        S1101
                    ┌──────▼──────────────┐
                    │  Obtain Image Signal │
                    └──────┬──────────────┘
                           │                                              │
                           │        S1102                                 │
                    ┌──────▼──────────────┐                              │
                    │ High Frequency Band  │                              │
                    │ Suppression Filtering│                              │
                    └──────┬──────────────┘                              │
                           │        S1103                                 │
                    ┌──────▼──────────────┐                              │
                    │ High Frequency Band  │                              │
                    │ Suppressed Signal    │                              │
                    │ Temporal Coding      │                              │
                    └──────┬──────────────┘                              │
                           │        S1104                                 │
                    ┌──────▼──────────────┐                              │
                    │ High Frequency Band  │                              │
                    │ Suppressed Signal    │                              │
                    │ Temporal Decoding    │                              │
                    └──────┬──────────────┘                              │
                           │        S1105                                 │
                    ┌──────▼──────────────┐                              │
                    │ High Frequency Band  │                              │
                    │ Reconstruction Filtering│                           │
                    └──────┬──────────────┘                              │
```

S1106                    S1107        S1108

Allowed Reconstruction?    NO    Tried All Filters?    NO    Filter Change

YES                                          YES

S1109                                       S1110

Output Filter Number          Judge High Frequency Band Reconstruction as Unavailable

End

FIG. 14A

1201

| Picture Header | MB | MB | | ┆ | | Picture Header | MB | MB | | ┆ |

1202

FIG. 14B

1203        1202

1201

| Picture Header | | MB | MB | MB | MB | | ┆ |

FIG. 14C

1202        1205

1204

| MBH | | MB data | MBH | MB data | MBH | MB data |

| MBH | | MB data | MBH | MB data |

EP 1 631 090 A1

FIG. 15

EP 1 631 090 A1

## FIG. 16

```
                    ┌──────────────┐
                    │    Start     │
                    └──────┬───────┘
                           ↓
              ┌────────────────────────┐  S1401
              │ Obtain Input Image     │
              │ Signal                 │
              └────────────┬───────────┘
                           ↓
                  ┌──────────────────┐  S1402
                  │  Edge Detection  │
                  └────────┬─────────┘
                           ↓        S1403
                    ◇──────────────◇      NO
                   ╱  Edge Region?  ╲──────────────┐
                    ◇──────────────◇               ↓
                        YES │                ┌──────────────────────┐  S1404
                            │                │ Variance Calculation │
                            │                └──────────┬───────────┘
                            │                           ↓        S1405
                            │                    ◇──────────────◇     NO
                            │                   ╱ Variance Large? ╲────────────┐
                            │                    ◇──────────────◇              │
                            │                        YES │                     │
     S1406                  │              S1407         ↓            S1408     ↓
  ┌───────────────┐        │      ┌────────────────────────┐   ┌──────────────────┐
  │  Edge Filter  │        │      │ High Frequency Band     │   │ Low Frequency    │
  │               │        │      │ Suppression Filter      │   │ Filter           │
  └───────┬───────┘        │      └───────────┬─────────────┘   └────────┬─────────┘
          │                │                  │                          │
          └────────────────┴──────────────────┴──────────────────────────┘
                           ↓
                  ┌──────────────────┐  S1412
                  │  Mode Signal     │
                  │  Generation      │
                  └────────┬─────────┘
                           ↓
                    ┌──────────────┐
                    │     End      │
                    └──────────────┘
```

# FIG. 17

EP 1 631 090 A1

## FIG. 18

```
                    ┌──────────────┐
                    │    Start     │
                    └──────┬───────┘
                           │
                    ┌──────▼───────┐   S1601
                    │Obtain Decoded│
                    │ Image Signal │
                    └──────┬───────┘
                           │
                    ┌──────▼───────┐   S1602
                    │Edge Detection│
                    └──────┬───────┘
                           │        S1603
                       ◇──▼──────◇        NO
                      ◇  Edge Area? ◇──────────────┐
                       ◇─────────◇                 │
                        │                    ┌──────▼───────────┐  S1604
                       YES                   │Variance Calculation│
                        │                    └──────┬───────────┘
                        │                           │      S1605
                        │                       ◇───▼──────◇      NO
                        │                      ◇Variance Large?◇───────┐
                        │                       ◇──────────◇           │
                        │      S1606         YES │      S1607          │  S1608
                 ┌──────▼─────┐        ┌─────────▼──────────┐   ┌──────▼───────┐
                 │ Edge Filter│        │High Frequency Band │   │Low Frequency │
                 └──────┬─────┘        │Reconstruction Filter│   │   Filter     │
                        │              └─────────┬──────────┘   └──────┬───────┘
                        └────────────────────────┼─────────────────────┘
                                        ┌─────────▼──────────┐  S1609
                                        │Generate Predictive │
                                        │   Mode Signal      │
                                        └─────────┬──────────┘
                                            ┌─────▼─────┐
                                            │    End    │
                                            └───────────┘
```

## FIG. 19A

High Frequency Suppression Unit

## FIG. 19B

Signal Reconstruction Unit

## FIG. 19C

Signal Reconstruction Unit

FIG. 20A

G

F

FIG. 20B

G

F

FIG. 20C

G

F

FIG. 20D

G

F

FIG. 21A

G

Input Signal

FIG. 21D

G

Decoded High Frequency
Band Suppressed Signal

FIG. 21B

G

High Frequency Band
Suppressed Signal

FIG. 21E

G

Filter Characteristic

FIG. 21C

G

High Frequency Band
Modified Signal

FIG. 21F

G

Reconstructed Signal

Fig. 22A

Se

Tr

FD

Fig. 22B

F

FD

Fig. 22C

FDD

Cs

F

## Fig. 23

Streaming server ex103

LSI ex117

Camera ex116

Computer ex111

Internet ex101

ex107

Telephone network ex104

ex108

PDA ex112

ex109

Camera ex113

Internet service provider ex102

ex110

Cell phone ex115

Cell phone ex114

ex100

EP 1 631 090 A1

# Fig. 24

ex201

ex208

ex202

ex203

ex204

1 2 3
4 5 6
7 8 9
* 0 #
manner

ex206

ex207

SD

ex205

ex115

## Fig. 25

- Display Unit — ex202
- LCD Control Unit — ex302
- Picture Decoding Unit — ex309
- Multiplex/Demultiplex Unit — ex308
- Recording Medium — ex207
- Record/Reproduce Unit — ex307
- Communication Circuit Unit — ex301
- Modem Circuit Unit — ex306
- Voice Input Unit — ex205
- Voice Processing Unit — ex305
- Voice Output Unit — ex208
- ex201
- ex313
- Power Supply Circuit Unit — ex310 → To each unit
- Main Control Unit — ex311
- Operation Input Control Unit — ex304
- Operation Key — ex204
- Picture Coding Unit — ex312
- Camera I/F Unit — ex303
- Camera Unit — ex203
- ex115

EP 1 631 090 A1

## Fig. 26

ex402

Monitor ex404

Reproduction
Device ex403

Satellite ex410

Antenna ex411

Car ex412

Antenna ex406

Car Navigation System ex413

Broadcast Station ex409

Cable ex405

ex421

ex422

Monitor ex408

STB ex407

Television ex401

SD

Recorder ex420

EP 1 631 090 A1

European Patent Office

## EUROPEAN SEARCH REPORT

Application Number

EP 04 02 0652

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HADAR O ET AL: "Enhancement of an image compression algorithm by pre- and post-filtering" OPTICAL ENGINEERING, vol. 40, no. 2, February 2001 (2001-02), pages 193-199, XP002312701 SPIE, USA ISSN: 0091-3286 * the whole document * | 1-19 | H04N7/26 H04N7/50 |
| X | HADAR O ET AL: "Image compression improvement by prefiltering" PROCEEDINGS OF APPLICATIONS OF DIGITAL IMAGE PROCESSING XXI, SAN DIEGO, CA, USA, 21-24 JULY 1998, vol. 3460, July 1998 (1998-07), pages 895-905, XP0002312702 THE INTERNATIONAL SOCIETY FOR OPTICAL ENGINEERING SPIE, USA ISSN: 0277-786X * the whole document * | 1-19 | |
| X | WO 01/52550 A (KLEIN GUNNEWIEK REINIER B M ; HOLL MATHIEU (NL); BRUELS WILHELMUS H A) 19 July 2001 (2001-07-19) * the whole document * | 1-19 | **TECHNICAL FIELDS SEARCHED (Int.Cl.7)** H04N |
| A | EP 0 597 647 A (SONY CORP) 18 May 1994 (1994-05-18) * column 6, line 38 - line 57 * | 1-19 | |
| A | WO 97/46019 A (BOCK ALOIS MARTIN ; NDS LTD (GB)) 4 December 1997 (1997-12-04) * the whole document * | 1-19 | |
| A | US 6 269 123 B1 (MATSUNAGA OSAMU ET AL) 31 July 2001 (2001-07-31) * column 3, line 40 - line 49 * * figure 2 * | 1-19 | |

The present search report has been drawn up for all claims

| Place of search | Date of completion of the search | Examiner |
|---|---|---|
| The Hague | 27 January 2005 | Lombardi, G |

EP 1 631 090 A1

## ANNEX TO THE EUROPEAN SEARCH REPORT
## ON EUROPEAN PATENT APPLICATION NO.

EP 04 02 0652

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2005

| Patent document cited in search report | | Publication date | Patent family member(s) | | Publication date |
|---|---|---|---|---|---|
| WO 0152550 | A | 19-07-2001 | CN | 1364384 T | 14-08-2002 |
| | | | WO | 0152550 A1 | 19-07-2001 |
| | | | EP | 1172008 A1 | 16-01-2002 |
| | | | JP | 2003520513 T | 02-07-2003 |
| | | | US | 2003058940 A1 | 27-03-2003 |
| EP 0597647 | A | 18-05-1994 | JP | 3189861 B2 | 16-07-2001 |
| | | | JP | 6153152 A | 31-05-1994 |
| | | | DE | 69325771 D1 | 02-09-1999 |
| | | | DE | 69325771 T2 | 02-03-2000 |
| | | | EP | 0597647 A2 | 18-05-1994 |
| | | | US | 5640208 A | 17-06-1997 |
| WO 9746019 | A | 04-12-1997 | EP | 0906699 A1 | 07-04-1999 |
| | | | WO | 9746019 A1 | 04-12-1997 |
| | | | JP | 2000511717 T | 05-09-2000 |
| US 6269123 | B1 | 31-07-2001 | JP | 11234668 A | 27-08-1999 |

EPO FORM P0459

For more details about this annex : see Official Journal of the European Patent Office, No. 12/82

48